(19) Europäisches Patentamt
European Patent Office
Office européen des brevets

(11) EP 0 758 784 A2

(12) EUROPEAN PATENT APPLICATION

(43) Date of publication:
19.02.1997 Bulletin 1997/08

(51) Int Cl.6: G11B 20/10

(21) Application number: 96306004.1

(22) Date of filing: 16.08.1996

(84) Designated Contracting States:
DE FR NL

(30) Priority: 16.08.1995 JP 208717/95
16.08.1995 JP 208723/95
16.08.1995 JP 208727/95
16.08.1995 JP 208729/95

(71) Applicant: NIKON CORPORATION
Tokyo 100 (JP)

(72) Inventors:
- Hayashi, Masatoshi
Chiyoda-ku, Tokyo (JP)
- Kimura, Isao
Chiyoda-ku, Tokyo (JP)

(74) Representative: Skone James, Robert Edmund
GILL JENNINGS & EVERY
Broadgate House
7 Eldon Street
London EC2M 7LH (GB)

# (54) Information regenerating apparatus

(57) An information regenerating apparatus having a first to Nth regenerating means (I, II, III) which have different code recovery performances which regenerate information recorded in a recording medium (22) and a regenerating method selecting means (7) for selecting any of the first to Nth regenerating means (I, II, III) to regenerate information. A second embodiment includes an information regenerating means having a first (I) and second (II) regenerating means for regenerating information recorded in a recording medium (22), one having a higher code recovery performance than the other and a regenerating method selecting means (7) for regenerating information using one regenerating means normally and the other while retrying the regeneration of the information when an error occurs. Another embodiment of the information recording and regenerating apparatus includes a third regenerating means (III) and a selecting means (7) for selecting the information regenerated with either the first, second or third regenerating means. In another embodiment, the information recording and regenerating apparatus includes a reference pattern recording means (28) for recording reference patterns in each sector of the recording medium with digital data, a regenerating method selecting means (7) for selecting any of the first to Nth regenerating means and an ideal value extracting means (27). An additional embodiment of the information recording and regenerating apparatus includes a first and second recording and regenerating means (29) for recording and retrying digital data in each sector of the recording medium, retrying regenerating information when the verify errors occur.

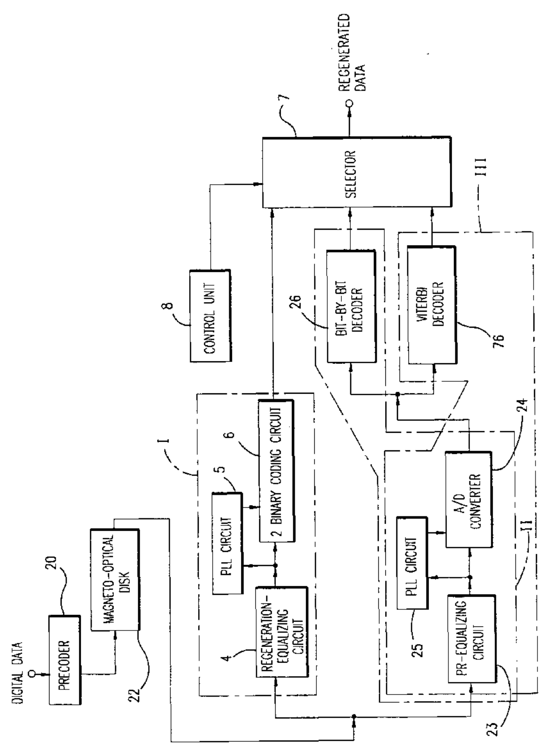


FIG.2

EP 0 758 784 A2

## Description

The present invention relates to a method and apparatus for regenerating information on disk-type recording mediums.

Because disk-type recording mediums, such as magneto-optical disks, can be used readily to record data and can be easily used to regenerate the recorded data, they have gained acceptance rapidly in recent years.

Figure 17 illustrates a typical concept of recording data to a magneto-optical disk.

A recording surface of the magneto-optical disk is normally magnetized in an upward direction (a direction shown with arrows in solid lines in the figure). When recording data on such magneto-optical disks, laser beams producing a light pulse corresponding to the data are irradiated from a laser 2. A recording part 1A on the magneto-optical disk, to which data is recorded, is heated by the irradiation of the laser beam and magnetized by a magnetic field, which is generated from a magnetic field generator 3 in a direction of the dotted arrow (downward) in the figure. By magnetizing in the downward direction the recording surface of the magneto-optical disk 1, which is normally magnetized in the upward direction, input data (digital data) is recorded in the recording part 1A on the magneto-optical disk.

The digital data recorded on the magneto-optical disk is regenerated by a regenerating apparatus (not shown). The general methods of regeneration are as follows:

(1) A method which regenerates information using a binary coding method after regeneration-equalizing (referred as regeneration-equalizing and binary coding method, hereafter);
(2) A method which regenerates information using a bit-by-bit decoding method after modulating in a partial response method (PR method) (referred as PR and bit-by-bit decoding method);
(3) A method which regenerates information using a viterbi decoding method after modulating in the partial response method (PR method) (referred as PR and viterbi decoding method).

In a magneto-optical disk apparatus, when a reading function is performed on the recorded data, such as, verifying after recording data, checking the format, and regenerating the data, only a specified method is used among the above regenerating methods. For example, the PR and Viterbi decoding method is used when checking after formatting the medium, when verifying after recording the data, and when regenerating the data, such as reading an ID (address data) at the time the data is being read.

The PR and viterbi decoding method is created to decrease errors when regenerating information. This method is particularly useful when regenerating information that was originally recorded in unstable recording conditions, as compared with the regeneration-equalizing and binary coding method and the PR and bit-by-bit decoding method.

Depending on the number of delays at the time of PR-equalizing, there are different PR and viterbi decoding methods for the PR and viterbi decoding method, such as PR (1, 1), PR (1, 2, 1), and PR (1, 3, 3, 1). The PR (1, 1) method has one time delay, and can be composed of a relatively simple circuit since the number of registers used in a viterbi decoder can be as few as two. The number of delays becomes more than double in the PR (1, 2, 1) method and the like, which causes extensive code recovery performance due to detailed calculations. This may result in a high bit error rate.

In the PR (1, 2, 1) method, the number of delays becomes more than double. Accordingly, the number of registers required in the viterbi decoder increases two or three times, causing the required circuitry to become complicated. Moreover, time is unnecessarily consumed for decoding PR signals, and some processes may not be accomplished in real time in certain cases. Furthermore, because only one delay is accomplished with the PR (1, 1) method, the bit error rate is not satisfactory. In other words, complicated methods, such as the PR (1, 2, 1) method, is suitable for highly concentrated recordings, and the PR (1, 1) method, which is simple, is more advantageous to high speed processes. However, conventional magneto-optical disks can hold only one regenerating method, resulting in giving up either high reliability or high speed.

In addition, if only the PR and viterbi decoding method is used, there are cases where errors do not appear during the regeneration process when verifying after recording the data or when checking the format.

In an undesignated type a type which uses a variety of decoding methods, of storing and regenerating apparatuses, such as magneto-optical disks, there are cases where conditions of the characteristics of a drive or a medium at the time of recording and the conditions at the time of the normal regeneration are extremely different. Accordingly, it is required to optimize conditions at the time of recording in order to minimize errors when regenerating information under normal conditions. That is, when only the PR and viterbi decoding method is used, the errors cannot be detected in the situation where recording conditions were unreliable, causing an occurrence of errors at the time of normal regeneration.

It is an aspect of the present invention to provide an information regenerating apparatus which can possess both high reliability and high processing speed.

It is also an aspect of the present invention to provide an information recording and regenerating apparatus which can closely check the condition of recording while minimizing the occurrence of errors at the time of normal regeneration.

A first embodiment of the present invention provides a first to Nth regenerating means which have different code recovery performances which regenerate information recorded in a recording medium using the viterbi decoding method after modulating with the partial response method to select any of the first to Nth regenerating means to regenerate information in accordance with conditions. Therefore, in the first embodiment of the present invention, which one of the first to Nth regenerating means regenerates information is selected in accordance with predetermined conditions. In the present embodiment, devices in which a selection between the PR (1, 1) method and the PR (1, 2, 1) method is possible are used as a PR-equalizing circuit and a viterbi decoder. A regenerating method selector is provided, from which select signals are sent to the PR-equalizing circuit and the viterbi decoder. This provides instruction so that the PR (1, 1) method is selected for the normal regeneration, and that the PR (1, 2, 1) method is selected when retrying the regeneration in a case where data errors (bit errors) occur.

A second embodiment of the present invention provides first regenerating means for regenerating information recorded in a recording medium in the viterbi decoding method after modulating with the partial response means and second regenerating means for regenerating information recorded in the recording medium in the viterbi decoding method after modulating with the partial response method which has higher code recovery performance than said first regenerating means to regenerate information with the first regenerating means when normally regenerating information, while retrying the regeneration of the information with the second regenerating means when data error occur while regenerating the data. Therefore, in the second invention, regeneration of information is accomplished by the first regenerating means when normally regenerating information and is retried by the second regenerating means when data error occurs while regenerating information. In this second embodiment, a first regeneration system I using the regeneration-equalizing and binary coding method, a second regeneration system II using the PR and bit-by-bit decoding method, and a third regenerating method III using the PR and viterbi decoding method are provided, so that the regenerated data from the first, second, third regeneration systems, I, II, and III, can be provided to a selector. The first regeneration system I is composed of a regeneration-equalizing circuit, a PLL circuit, and a binary coding circuit. The second regeneration system II is composed of a PR-equalizing circuit, an A/D converter, a PLL circuit, and a bit-by-bit decoder. The third regeneration system III is composed of a PR-equalizing circuit, an A/D converter, a PLL circuit, and a viterbi decoder.

The third embodiment of the present invention provides first to Nth regenerating means which have different code recovery performances which regenerate information recorded in a recording medium using the viterbi decoding method after modulating with the partial response method to select any of said first to Nth regenerating means to regenerate information in accordance with a condition for controlling a manual switch, a condition for detecting data errors, a condition for detecting disk types, a condition for detecting disk temperatures, and a condition for detecting line speed of targeted sectors. Therefore, in the third invention, which one of the first to Nth regenerating means is used for regenerate information is selected in accordance with the condition for controlling a manual switch, the condition for detecting data errors, the condition for detecting disk types, the condition for detecting disk temperatures, and the condition for detecting line speed of targeted sectors.

The fourth embodiment of the present invention provides first regenerating means for regenerating information recorded in the recording medium in the binary coding method after regeneration-equalizing and second regenerating means for regenerating the information recording in the recording medium in a specified decoding method after modulating with the partial response method, and selects either the data regenerated with said first regenerating means or the data regenerated with said second regenerating means in accordance with conditions.

Therefore, in the fourth embodiment, by selecting information regenerated by the second regenerating means (information regenerated by a PR and specified decoding method) when normally regenerating or information regenerated by the first regenerating means (information regenerated by a regeneration-equalizing and binary coding method) when checking the condition of recording, closely checking the recording condition becomes possible while controlling the occurrence of errors when normally regenerating low.

The fifth embodiment of the present invention provides first regenerating means for regenerating information recorded in said recording medium in a bit-by-bit decoding method after modulating with the partial response method and second regenerating means for regenerating information recorded in the recording medium in the viterbi decoding method after modulating with the partial response method to select either the information regenerated with the first regenerating means or the information regenerated with the second regenerating means in accordance with conditions.

Therefore, in the fifth embodiment, by selecting information regenerated by the second regenerating means (information regenerated by a PR and viterbi decoding method) when normally generating information, or information regenerated by the first regenerating means (information regenerated by a PR and bit-by-bit decoding method) when checking the recording condition, closely checking the recording condition becomes possible while controlling the occurrence of errors when normally recording low.

The sixth embodiment of the present invention provides first regenerating means for regenerating information recorded in said recording medium in the binary coding method after regeneration-equalizing, second regenerating means for regenerating information recorded in the recording member in the bit-by-bit decoding method after modulating with the partial response method, and third regenerating means for regenerating information recorded in the recording member in the viterbi decoding method after modulating with the partial response method to select either the information regenerated with the first regenerating means, the information regenerated with the second regenerating means, or information regenerated by the third regenerating means in accordance with conditions.

Therefore, in the sixth embodiment, by selecting the information regenerated by the third regenerating means (information regenerated by the PR and viterbi decoding method) when normally regenerating information, the information regenerated by the second regenerating means (information regenerated by the PR and bit-by-bit decoding method) when verifying the information, and the information regenerated by the first regenerating means (information regenerated by the regeneration-equalizing and binary coding method) when checking the format, closely checking the recording condition becomes possible while controlling the occurrence of errors when normally regenerating the information low.

The seventh embodiment of the present invention provides first to Nth regenerating means which have different code recovery performances which regenerate information recorded in the recording medium using the viterbi decoding method after modulating with the partial response method and reference pattern recording means for recording first to Nth reference patterns which are sources of extracting ideal values used for the viterbi decoding in the first to Nth regenerating means in each sector of the recording medium with digital data. Therefore, in the seventh invention, the first to Nth reference patterns are recorded in each sector of the recording medium with digital data.

The eighth embodiment of the present invention provides first to Nth regenerating means which have different code recovery performances which regenerate information recorded in the recording medium using the viterbi decoding method after modulating with the partial response method, reference pattern recording means for recording first to Nth reference patterns which are sources of extracting ideal values used for the viterbi decoding in said first to Nth regenerating means in each sector of the recording medium with digital data, and regenerating method selecting means for selecting any of said first to Nth regenerating means to regenerate information with depending on conditions, to extract reference patterns corresponding to the regenerating method selected by the regenerating method selecting method from sample data before regenerated in the viterbi decoding method to extract ideal values used for the viterbi decoding from extracted reference patterns.

Therefore, in the eighth embodiment, the first to Nth reference patterns are recorded in each sector of the recording medium with digital data. When regeneration information, which one of the first to the Nth reference patterns are used for regenerating information is selected in accordance with conditions. In this case, the reference pattern corresponding to the selected regenerating method is extracted from sample data before regenerating in the viterbi decoding method to extract ideal values from the extracted reference pattern, and viterbi decoding is accomplished using the extracted ideal values.

The ninth embodiment of the present invention provides first regenerating means for regenerating information recorded in the recording medium in a viterbi decoding method after modulating it in a partial response method, second regenerating means for regenerating information recorded in the recording medium in the viterbi decoding method after modulating it in the partial response method which has higher code recovery performance than the first regenerating means, reference pattern recording means for recording first and second reference patterns which are sources of extracting ideal values used for viterbi decoding in the first and second recording means into each sector of the recording medium with digital data, and regenerating method selecting means for regenerating information by the first regenerating means when normally regenerating and retrying the regeneration of information by the second regenerating means when data errors occur, to extract the reference pattern corresponding to the regenerating method selected by the regenerating method selecting means from sample data before regenerated in the viterbi decoding method to extract ideal values used for viterbi decoding from the extracted reference patterns.

Therefore, in the ninth embodiment, the first and second reference patterns are recorded in each sector of the recording medium with digital data. When normally regenerating information, the information is regenerated by the first regenerating means, and if data errors occur while regenerating this information, the information is retried to be regenerated by the second regenerating means. In that case, the reference pattern corresponding to the selected regenerating method is extracted from sample data before regenerating in the viterbi decoding method to extract ideal values from the extracted reference pattern, and viterbi decoding is accomplished using the extracted ideal values.

The tenth embodiment of the present invention writes in advance in each sector of the recording medium first to Nth reference patterns which are the sources of extracting ideal values used for viterbi decoding in first to Nth partial response modulation, which has difference code recovery performance, and viterbi decoding method. Therefore, in the tenth invention, since the first to Nth reference patterns are prerecorded in each sector of the recording medium, the reference patterns are not required to be recorded to each sector with digital data when recording information to the recording medium.

The eleventh embodiment of the present invention provides first to Nth regenerating means having different code recovery performance for regenerating information recorded in said recording medium in the viterbi decoding method after modulating it in the partial response method and reference pattern recording means for recording in each sector with digital data specified one of first to Nth reference patterns which are the sources for extracting ideal values used for viterbi decoding in said first to Nth regenerating means. Therefore, in the eleventh invention, specified one of the first to Nth reference patterns is recorded in each sector of the medium with digital data.

The twelfth embodiment of the present invention provides first regenerating means for regenerating information recorded in said recording medium in the viterbi decoding method after modulating it in the partial response method and second regenerating means for regenerating information recorded in said recording medium in the viterbi decoding method after modulating it in the partial response method which has higher code recovery performance than the first regenerating means, to record with digital data in each sector of the recording medium first reference pattern which is a source of extracting ideal values used the viterbi decoding in said first regenerating means and regenerating information by the first regenerating means when normally recording and regenerating information, and to retry recording second reference pattern which is a source of extracting ideal value used for viterbi decoding in said second regenerating means with digital data in sectors in which verify errors occur and retrying regenerating information by said second regenerating means when the verify errors occur while recording and regenerating information.

Therefore, in the twelfth embodiment, when normally regenerating information, the first reference pattern is recorded in each sector of the recording medium with digital data, and information is regenerated by the first regenerating means. When verify errors occur when recording or regenerating information, the second reference pattern is rerecorded with digital data to the sector where the verify errors occurred, and the regeneration of information is retried by the second regenerating means.

The thirteenth embodiment of the present invention writes in advance in each sector of the recording medium specified one of the first to Nth reference patterns which is the source of extracting ideal values used for viterbi decoding in the first to Nth partial response modulation, which has different code recovery performance, and viterbi decoding method.

Therefore, in the thirteenth embodiment, since specified one of the first to Nth reference patterns is written in advance in each sector of the recording medium, the reference pattern is not required to be recorded to each sector with digital data.

The fourteenth embodiment of the present invention prerecords the first and second reference patterns which are the sources of extracting ideal values used for viterbi decoding in the first and second partial response modulation, which have different code recovery performance, and viterbi decoding method in each sector of first and second areas, respectively. Therefore, in the fourteenth invention, since the first and second reference patterns are prerecorded in each sector of the first and second areas of the recording medium, respectively, these reference patterns are not required to be recorded in each sector of the recording medium with digital data each time, and thus information can be regenerated in the PR and viterbi decoding method which is the most appropriate for each area.

Additional aspects and advantages of the invention will be set forth, in part, in the description that follows and, in part, will be obvious from the description, or may be learned by practice of the invention. The aspects and advantages of the invention may be realized and attained by means of the instrumentalities and combinations particularly pointed out in the appended claims. It will be understood that each of the features described herein can be taken separately or jointly.

Figure 1 is a block diagram showing a main part of a magneto-optical disk apparatus according to the first embodiment of the present invention.

Figure 2 is a block diagram showing a main part of a magneto-optical disk apparatus according to the second embodiment of the present invention.

Figure 3 is a block diagram showing a main part of a magneto-optical disk apparatus according to the third embodiment of the present invention.

Fig. 4 is a block diagram showing a main part of a magneto-optical disk apparatus according to the fourth embodiment of the present invention.

Figure 5 is a block diagram showing a system for processing regenerating signals with a PR and bit-by-bit decoding method.

Figure 6 shows active waveforms at each part of the system shown in Figure 5.

Figure 7 shows a precoder used in the system shown in Figure 5.

Figure 8 shows a PR-equalizing circuit used in the system shown in Figure 5.

Figure 9 shows a bit-by-bit decoder used in the system shown in Figure 5.

Figure 10 is a block diagram showing a system for processing regeneration signals with a PR and viterbi decoding method.

Figure 11 shows active waveforms at each part of the system shown in Figure 10.

Figure 12 shows a viterbi decoder used in the system shown in Figure 10.

Figure 13 shows a viterbi decoder used when the system shown in Figure 10 uses a PR (1, 2, 1) method.

Figure 14 shows a PR-equalizing circuit in the magneto-optical disk apparatus shown in Figure 3.

Figure 15 shows an example of a layout of user data and a reference pattern in a recording signal composing circuit in the magneto-optical disk apparatus shown in Figure 3.

Figure 16 shows an example of a regenerating method selector which determines a regenerating method from compound information.

Figure 17 shows a typical concept of recording data to a magneto-optical disk.

Before a magneto-optical disk apparatus in the embodiment of the present invention is described, each of the regeneration equalization and binary method, the PR and bit-by-bit decoding method, and the PR and viterbi decoding methods are described.

In a general regeneration-equalizing and binary coding method, waveforms of regenerating signals generated from an magneto-optical disk sometimes interfere between codes. This is caused by the relationship between the shortest mark length and the diameter of a laser spot. In order to reduce this problem, the waveforms of the regenerating signals are input to a regeneration-equalizing circuit which is created as Nyquist type. A clock signal, which is synchronized to output waveforms from the regeneration-equalizing circuit, is extracted using a PLL circuit. A center (DC level) of the amplitude of the regenerating signals is set as a threshold value and is digitalized in binary code of "0" and "1". As understood from the above, there are no elements for correcting the codes in the regeneration equalization and binary method.

There are several different kinds of methods in using the PR method. The PR (1, 1) method is commonly used for the magneto-optical disk apparatuses. Concepts of the regeneration are described with the PR (1, 1) method as an example hereafter.

Figure 5 shows a PR and bit-by-bit decoding system based on the PR (1, 1) method. Figure 6 is a waveform diagram showing active waveforms of each unit of the system.

A precoder 20, shown in Figure 5, converts digital data shown in Figure 6 (a), which is output from an external circuit (not shown), into pattern data shown in Figure 6 (b) when digital data is input. Such pattern conversion is called a NRZI conversion and is accomplished using an adder 41 which accomplishes a modulo-two addition and a delay circuit 42 which delays only by one bit of data. Adder 41 accomplishes the module-two addition of digital data that is input and the data which is delayed by one bit. The result is output and recorded to a magneto-optical disk 22 as NRZI data.

This NRZI conversion by the precoder 20 is required since it can prevent transmission of errors in processes using the bit-by-bit decoding which is executed at the time of regeneration. This will be described later.

The data recorded on the magneto-optical disk 22 is regenerated as regenerating signals indicated in Figure 6 (c) and output to a PR-equalizing circuit 23. The PR-equalizing circuit 23 converts the regenerating signals into PR signals indicated in Figure 6 (e). Such conversion by the PR-equalizing circuit 23, that is PR-equalizing, is accomplished by an adder 51 and a delay circuit 52 shown in Figure 8.

In other words, the regenerating signals indicated in Figure 6 (c) which are transmitted from the magneto-optical disk 22 are not only provided to adder 51 but also delayed by 1T (T is a time by one bit) by the delay circuit 52 and provided to adder 51 as delay signals indicated in Figure 6 (d). Adder 51 creates the PR signals indicated in Figure 6(e) by adding both signals and outputting the PR signals to an A/D convertor 24 and a PLL circuit 25.

In this case, PLL circuit 25 generates clock signals indicated in Figure 6 (f), to which the PR signals were synchronized, and provides the clock signals to A/D converter 24. At A/D converter 24, the PR signals are sampled with the clock signals to generate data of ternary patterns, i2, i1, and i0, which are indicated in Figure 6 (g). Then, the data is provided to a bit-by-bit decoder 26 as sample data.

Here, amplitude of the actual sample data is spread out having a center peak at the ternary values, i2, i1, and i0 due to the fact that there are fluctuations in the PR signals in Figure 6 (e). These fluctuations are caused by the condition of the medium (magneto-optical disk 22), the recording condition of the medium, and noise originating from the regenerating circuit or the like which regenerated data from the medium.

Bit-by-bit decoder 26 converts the sample data input into regenerated data, as indicated in Figure 6 (h), and outputs it.

Figure 9 is a block diagram showing the components of bit-by-bit decoder 26, which is composed of a ternary coding circuit 61 and a binary coding circuit 62. Ternary coding circuit 61 sets, when ideal values which are input from an external device (not shown) are i2, i1, and i0, threshold levels L1 and L2 between i2 and i1 and between i1 and i0, respectively. It further determines what logic the above sample data has with reference to the threshold levels L1 and L2.

Binary coding circuit 62, which receives an output from ternary coding circuit 61, outputs "0" as the regenerated data when ternary coding circuit 61 logically determines i2 or i1, or "1" as the regenerated data when ternary coding circuit 61 logically determines i1. As a result, the digital data indicated in Figure 6 (a), which was recorded on magneto-optical disk 22, and the regenerated data in Figure 6 (h) are the same in the system shown in Figure 5. This is true unless data at any sample point is effected by the fluctuation of the above signals with a fluctuation which exceeds the threshold values.

The PR and viterbi decoding method is extremely useful under certain conditions. When the fluctuation affecting the PR signals in Figure 6 (e) is larger than the noise originated in the condition of the medium, the recording condition of the medium and the regeneration circuit the system of Figure 5 is directly linked to bit errors in the regeneration data. This is also true when the sample data at any sample points is effected by fluctuations which exceed the level of the threshold value. Because of this, to reduce the occurrence of such bit errors, a PR and viterbi decoding system using a viterbi decoder 76, shown in Fig 10, is ordinarily used instead of the bit-by-bit decoder 26.

That is, in the system shown in Figure 10, in addition to using a magneto-optical disk 22, a PR-equalizing circuit 23, an A/D converter 24, and a PLL circuit 25 similar to the system in Figure 5, a viterbi decoder 76 is used. Precoder 20, which accomplishes the NRZI conversion and was necessary in the system in Figure 5, is not required in the system in Figure 10 since errors are not propagated if viterbi decoder 76 is used.

Figure 11 shows active waveforms at each part of the PR and viterbi decoding system. When the digital data indicated in Figure 11 (a) is recorded on magneto-optical disk 22, signals regenerated from magneto-optical disk 22 are signals indicated in Figure 11 (b) and are output to PR-equalizing circuit 23. In PR-equalizing circuit 23, a conversion similar to the system in Figure 5 is accomplished. The signals are provided to A/D converter 24 and PLL circuit 25 as the PR signals shown in Figure 11.

PLL circuit 25 creates clock signals indicated in Figure 11 (d) which are synchronized from the input PR signals and provides the signals to A/D converter 24. A/D converter 24 samples the PR signals from the clock signals and provides an input to viterbi decoder 76 as sample data indicated in Figure 11 (e).

Here, because fluctuation occurs in the PR signals in Figure 11 (c), caused by the condition of the medium, the recording condition of the medium, or the noise originated from the regeneration circuit, the actual amplitude of the sample data in Figure 11 (e) is spread, centering on ternary values of i2, i1, and i0. This is similar to the system in Figure 5. Viterbi decoder 76 regenerates digital data similar to the data indicated in Figure 11 (A) from such sample data.

The viterbi decoder may be used in another manner. Figure 12 is a block diagram showing the components of viterbi decoder 76, which is comprised of two registers 91 and 92, two N-bit (N is any integer) data series registers 93 and 94, a condition calculating circuit 95, and a determination circuit 96. A value "0" is set at the lowest bit of the data series register 93, and a value "1" is set at the lowest bit of the data series register 94.

Then, viterbi decoder 76 accomplishes the following processes every time sample data (the sample data is referred as a letter y) is output from A/D converter 24.

First, at condition calculation circuit 95, 4 values, M00, M01, M10, and M11, are calculated from the following formulas (1) through (4) based on values M0 and M1 from two condition register 91 and 92, the sample data y output from A/D converter 24, and expected values d0, d1, and d2 (where d0, d1, and d2 are a minimum value, an intermediate value, and a maximum value, respectively, and d0=i0, d1=i1, and d2=i2 when the ideal values of the sample data is i0, i1, and i2, respectively) of the sample data provided from an external device (not shown):

$$M00 = M0 - 2 * y * d0 + d0^2 \quad (1)$$

$$M01 = M1 - 2 * y * d1 + d1^2 \quad (2)$$

$$M10 = M0 - 2 * y * d1 + d1^2 \quad (3)$$

$$M11 = M1 - 2 * y * d2 + d2^2 \quad (4)$$

Determination circuit 96 compares the value M00 and the value M01 first.

Then, when the value M00 is less than the value M01 (M00 < M01), the value M00 is stored in condition register 91. The values of (N-1) through 0 bit in data series register 93 are shifted in the higher level direction by 1 bit.

When the value M00 is greater than or equal to the value M01 (M00 ≥ M01), the value M01 is stored in condition register 91. The values of (N-1) through 0 in data series register 94 are copied to N through 1 bit in data series register 93, respectively.

Next, determination circuit 96 compares the value M10 and the value M11.

When the value M10 is greater than the value M11 (M10 > M11), the value M11 is stored in condition register 91. The values of (N-1) through 0 bit in data series register 93 are shifted in the higher level direction by 1 bit.

When the value M10 is less than or equal to the value M11 (M10 ≤ M11), the value M10 is stored in condition register 91. The values of (N-1) through 0 in data series register 94 are copied to N through 1 bit in data series register 93, respectively.

Then, determining circuit 96 outputs the highest bit in data series register 93 as the regenerated data.

As described above, viterbi decoder 76 does not achieve a hard determination for determining whether "0" or "1", depending on the threshold level for the data, like bit-by-bit decoder 26. Viterbi decoder 76 achieves a soft determination to achieve a more accurate data series by noting the condition of the data in context when inputting the sample data.

Thus, two series register 93 and 94 produce either "0" or "1" every time the shift action is accomplished. The data is determined to be either "0" or "1" at the time of the position of the highest bit is reached and this is output as the regenerated data.

When a bit number N of data series registers 93 and 94 is small, there is a possibility that neither "0" nor "1" is determined. As the bit number N is increased, there is less chance that neither "0" nor "1" is determined resulting in a reduction in bit error in the regenerated data. If the bit number N in the two data series registers 93 and 94 is increased, the highest bit of either registers can be output as the regenerated data. However, in this embodiment, the highest bit of series register 93 is output as the regenerated data.

In viterbi decoder 76, the probabilities of an occurrence for each data series are calculated at condition calculating circuit 95. A determination of the remaining data series, where the remaining data series is determined from the higher probability of occurrence among two data series resulting from the process at condition calculation circuit 95, is accomplished at the determining circuit 96. The data series registers 93 and 94 save two data series of the remaining data series, and condition registers 91 and 92 save the probabilities of occurrence of the remaining data. The bit error rate decreases since the regeneration of the digital data using the PR and viterbi coding method determines probabilities in accordance with the conditions in context. This is as compared with the method which provides binary data based simply on the threshold values.

PR and viterbi decoding method based on PR (1, 2, 1) method provides another method of operation.

A circuit to which two of the circuits in Figure 10 are serially connected as the PR-equalizing circuit 23 is used in the PR and viterbi decoding method based on the PR (1, 2, 1). The numbers "1, 1" in the PR (1, 1) mean that an output becomes "00011000" when data of "00010000" is input to the circuit in Figure 10. In the PR (1, 2, 1) method, the output becomes "000121000" when data of "00010000" is input. The PR signals created at the PR equalization circuit 23 in this PR (1, 2, 1) method are provided to A/D converter 24 and PLL circuit 25.

In this case, clock signals which are synchronized from the input signals are created from the input PR signals in PLL circuit 25 and are provided to A/D converter 24. The PR signals are sampled with the clock signals to create data of quinary patterns, i4, i3, i2, i1, and i0 in A/D converter 24. The data is then provided to viterbi decoder 76 as sample data.

The components of the viterbi decoder in this case are shown in Figure 13. Similarly to the case of the PR (1, 1) method, viterbi decoder 76 in this PR (1, 2, 1) method also generates regenerated data from the sample data y from A/D converter 24 and expected values d0, d1, d2, d3, d4 of the sample data input from a device (not shown). In the case of the PR (1, 2, 1) method, the number of the condition registers is increased to four (71, 72, 73, and 74), and is composed of four N-bit data series registers 75, 76, 77, and 78, a condition calculation circuit 79, and a determination circuit 80. Values "0" and "1" are set to the lowest bit of data series register 75 and 77 and the lowest bit of data series register 76 and 78, respectively.

Viterbi decoder 76 in the PR (1, 2, 1) method accomplishes the following processes each time the sample data y is provided by A/D converter 24.

First, eight values M000, M001, M100, M101, M010, M011, M110, and M111, are calculated using the following equations (5) through (12) in condition calculating circuit 79. This is based on four values M00, M10, M01, and M11 of four condition registers 71, 72, 73, and 74, the sample data y, and the expected values d0, d1, d2, d3, and d4 of the sample data (where d4 and d0 correspond to the maximum value and the minimum value, respectively, and when ideal value of the sample data are i4, i3, i2, i1, and i0, it becomes d4=i4, d3=i3, d2=i2, d1=i1, and d0=i0):

$$M000 = M00 - 2 * y * d0 + d00^2 \tag{5}$$

$$M001 = M01 - 2 * y * d1 + d01^2 \tag{6}$$

$$M100 = M00 - 2 * y * d1 + d01^2 \tag{7}$$

$$M101 = M01 - 2 * y * d2 + d02^2 \tag{8}$$

$$M010 = M10 - 2 * y * d2 + d02^2 \tag{9}$$

$$M011 = M11 - 2 * y * d3 + d03^2 \tag{10}$$

$$M110 = M10 - 2 * y * d3 + d03^2 \tag{11}$$

$$M111 = M11 - 2 * y * d4 + d04^2 \tag{12}$$

Next, determining circuit 80 compares the value M000 and the value M001.

If the value M000 is less than the value M001 (M000 < M001), the value M000 is stored in condition register 71, and value at (N-1) through 0 bit in data series register 75 are shifted to a higher level by one bit.

If the value M000 is greater than or equal to M001 (M000 ≥ M001), the value M001 is stored in condition register 71, and the values of (N-1) through 0 bit in data series register 77 are copied to the N through 1 bit in data series register 75, respectively.

Then, determining circuit 80 compares the value M100 and the value M101.

If the value M100 is less than the value M101 (M100 < M101), the value M100 is stored in condition register 72, and value at (N-1) through 0 bit in data series register 75 are copied to the N through 1 bit in data series register 76, respectively.

If the value M100 is greater than or equal to M101 (M100 ≥ M101), the value M101 is stored in condition register 72, and the values of (N-1) through 0 bit in data series register 77 are copied to the N through 1 bit in data series register 76, respectively.

Next, determination circuit 80 compares the value M010 and the value M011.

If the value M010 is less than the value M011 (M010 < M011), the value M010 is stored in condition register 73, and value at (N-1) through 0 bit in data series register 76 are copied to the N through 1 bit in data series register 77, respectively.

If the value M010 is greater than or equal to M011 (M010 ≥ M011), the value M011 is stored in condition register 73, and the values of (N-1) through 0 bit in data series register 76 are copied to the N through 1 bit in data series register 77, respectively.

Then, determination circuit 80 compares the value M110 and the value M111.

If the value M110 is less than the value M111 (M110 < M111), the value M110 is stored in condition register 74, and value at (N-1) through 0 bit in data series register 76 are copied to the N through 1 bit in data series register 78, respectively.

If the value M110 is greater than or equal to M111 (M110 ≥ M111), the value M111 is stored in condition register 72, and the values of (N-1) through 0 bit in data series register 78 are shifted to the higher level by one bit.

The determination circuit 80 outputs the highest bit in data series register 75 as the regenerated data thereafter.

Viterbi decoder 76 in the PR (1, 2, 1) method is operated as described above. A difference from the PR (1, 1) method is that the operation takes twice as long since the number of the registers used is double. However, because this method performs a more detailed calculation than the PR (1, 1) method, the bit error rate is reduced.

The operations of the processes for the regeneration equalization and binary coding method, the PR and bit-by-bit decoding method and the PR and viterbi decoding method are described above. Ideal values of ternary values in the sample data are required in the PR and bit-by-bit decoding method and the PR and viterbi decoding method since the regenerated data is created from the sample data of the PR signals in both methods. The bit-by-bit decoder 26 in the PR and bit-by-bit decoding method sets the threshold level from the ideal values to change the sample data into ternary values. The viterbi decoder 76 in the PR and viterbi decoding method accomplishes viterbi decoding of the sample data with the ideal values.

The magneto-optical disk apparatus shown in Figure 1 is described using the PR and viterbi decoding method based on the above PR (1, 1) method and the PR (1, 2, 1) method.

In Figure 1, symbols which are the same as those in Figure 10 indicate the same or similar composite elements, thus the descriptions thereof are omitted. In the present embodiment, devices in which a selection between the PR (1, 1) method and the PR (1, 2, 1) method is possible are used as a PR-equalizing circuit 23 and a viterbi decoder 76. A regenerating method selector 19 is provided, from which select signals are sent to PR-equalizing circuit 23 and viterbi decoder 76. This provides instruction so that the PR (1, 1) method is selected for the normal regeneration, and that the PR (1, 2, 1) method is selected when retrying the regeneration in a case where data errors (bit errors) occur.

Figure 14 illustrates the components of PR-equalizing circuit 23'. PR-equalizing circuit 23' has a first adder 61, a first delay circuit 62, a second adder 63, a second delay circuit 64, and a PR signal switching device. The selector signals are provided to the PR signal switching device from the regenerating method selector 19. The regenerating signals from magneto-optical disk 22 are provided only to adder 61 but also delayed by 1T by delay circuit 62 and provided to adder 61 as delay signals. Adder 61 adds both signals to create the PR (1, 1) signals and provides the signals to PR signal switching device 65.

Moreover, the PR (1, 1) signals are provided to adder 63 and also delayed further by 1T by delay circuit 64 and provided to adder 63 as delay signals. Adder 63 adds both signals to create the PR (1, 2, 1) signals and provides the signals to PR signal switching device 65. PR signal switching device 65 selects the PR (1, 1) signals when normally regenerating and PR (1, 2, 1) when retrying from the selector signals provided by the regenerating method selector and provides the signals to A/D converter 24 and PLL circuit 25 as the PR signals.

PLL circuit 25 creates clock signals synchronized to the input signals from the input PR signals and provides the signals to A/D converter 24, which samples the PR signals based upon the clock signals from PLL circuit 25. The sample data which is sampled at A/D converter 24 ideally becomes data of ternary patterns of i2, i1, and i0 if they are PR (1, 1) signals. This sample data becomes data of quinary patterns of i4, i3, i2, i1, and i0 if they are PR (1, 2, 1) signals. However, because fluctuations occur to the PR signals due to the condition of the medium, the recording condition of the medium, and noise originating in the regenerating circuit or the like, which regenerates data from the medium, the actual amplitude of the sample data is spread, centered on the ideal values.

The sample data from A/D converter 24 is provided to viterbi decoder 76'. The values d0, d1, d2, d3, and d4 are provided as the expectant values to viterbi decoder 76', in which the sample data supplied is viterbi converted. Viterbi decoder 76' converts the supplied sample data by selecting the PR (1, 1) method (see Figure 12) when regenerating data under normal conditions or the PR (1, 2, 1) method (see Figure 13) when retrying, from the selector signals provided from regenerating method selector 19.

In this embodiment, two kinds of viterbi decoding methods are used, namely the PR (1, 1) method and the PR (1, 2, 1) method. However, other than those methods, there are PR methods, such as a PR (1, 3, 3, 1) method, a PR (1, 0, -1) method, a PR (1, 1, -1, -1) method or a PR (1, 2, 0, -2, -1) method, which can be used in any combinations. Moreover, the combinations are not limited to two types, but multiple numbers of combinations are possible. That is, how these methods are combined can be divided into an integration type, Nyquist type, or various other types depending upon the characteristics of the waveforms of the regeneration signals from the recording medium.

As a result, the regeneration data by the PR (1, 1) method is obtained when normally regenerating, and the regeneration data by PR (1, 2, 1) method is obtained when retrying. Therefore, both the advantage of high speed processing of the PR (1, 1) and viterbi decoding method and the high reliability of the PR (1, 2, 1) and viterbi decoding method can be obtained.

Furthermore, in this embodiment, the composition was made so that the decoding method was switched from the PR (1, 1) and viterbi decoding method to the PR (1, 2, 1) and viterbi decoding method when retrying the regeneration in accordance with data errors. However, this arrangement can be made so that the decoding method is manually switched, or that the method is switched in accordance with the types (disk types) of the medium.

Figure 16 shows an example of a regenerating method selector 19 which determines the regenerating methods from composed information. By using such regenerating method selector, a more detailed selection of the regenerating method is possible.

The regenerating method selector 19 has a select signal generator 88, which receives signals from a manual switch 81, an error detecting means 82, a disk type detecting means 83, a format detecting means 84, a disk temperature detecting means 85, a line speed detecting means 86, an external control terminal 87, and a central control device 89. This creates select signals to be transmitted to PR equalization circuit 23' and viterbi decoder 76'.

That is, with this regenerating method selector 19', the regenerating method can be directly switched by controlling the select signal generator with manual switch 81. When an error in the regenerated data is detected by error detecting means 82, information is sent to select signal generator 88, resulting in automatically switching the regenerating method.

Disk types are recognized by disk type detecting means 83. The information thereof is sent to select signal generator 88, which switches the regenerating method according to the disk type. In other words, when the characteristic of the regeneration varies depending on the types of the medium, select signal generator 88 automatically switches the regenerating method.

Format types are detected by format detecting means 84 and information relating to the formal type is sent to select signal generator 88. This specifies the regenerating method to be used based on specified pattern information written in the format.

Furthermore, disk temperature detecting means 85 measures the temperature of the medium and sends the information to select signal generator 88. The regenerating method appropriate to the temperature of the medium is selected. Line speed detecting means 86 calculates line speed of the targeted sector from a position of the head, the number of rotations or the like of the medium, or the track number and sends information relating to speed to select signal generator 88, which selects the regenerating method proper for the line speed.

External control terminal 87 is for controlling select signal generator 88 externally. For example, it connects to a host computer for the magneto-optical disk apparatus and designates the regenerating method. Central control device 89 controls the timing for transmitting the select signals to PR-equalizing circuit 23 and viterbi decoder 76 from select signal generator 88.

Next, a magneto-optical disk apparatus shown in Figure 2 is described considering the regeneration-equalizing and binary coding method, the PR and bit-by-bit decoding method, and the PR and viterbi decoding method.

In Figure 2, symbols which are the same as ones in Figure 5 and Figure 10 indicate the same or similar composite elements, thus the descriptions thereof are omitted. In this embodiment, a first regeneration system I using the regeneration-equalizing and binary coding method, a second regeneration system II using the PR and bit-by-bit decoding method, and a third regenerating method III using the PR and viterbi decoding method are provided, so that the regenerated data from the first, second, third regeneration systems, I, II, and III, can be provided to a selector 7.

The first regeneration system I is composed of a regeneration-equalizing circuit 4, a PLL circuit 5, and a binary coding circuit 6. The second regeneration system II is composed of a PR-equalizing circuit 23, an A/D converter 24, a PLL circuit 25, and a bit-by-bit decoder 26. The third regeneration system III is composed of a PR-equalizing circuit 23, an A/D converter 24, a PLL circuit 25, and a viterbi decoder 76.

In this embodiment, at the selector 7, based on instructions from a control unit 8, the regenerated data from the first regeneration system I is selected as the output when checking the format. The regenerated data from the second regeneration systen II is selected as the output when verifying. The regenerated data from the third regeneration system III is selected as the output when normally regenerating data.

Next, operations for the magneto-optical disk apparatus is described. A precoder 20 converts digital data which is input to NRZI data. This NRZI conversion is necessary to prevent a propagation of errors in the processes using the bit-by-bit decoding executed at the time of regeneration. The converted digital data is recorded on magneto-optical disk 22 as NRZI data. The regeneration signals from magneto-optical disk 22 are input to the first, second, and third regeneration systems I, II, and III.

The first regeneration system I uses a regeneration-equalizing and binary coding method.

The regeneration signals from magneto-optical disk 22 are input to regeneration-equalizing circuit 4, which converts the regeneration signals into Nyquist type to avoid interferences between codes. The regenerated signals which were converted to the Nyquist type are provided to PLL circuit 5 and binary coding circuit 6. PLL circuit 5 extracts a clock signal synchronized to waveforms output from regeneration-equalizing circuit 4 and provides them to binary coding circuit 6. Binary coding circuit 6 sets the center (DC level) of the amplitude of the regeneration signals as a threshold, digitizes them in the binary code of "0" and "1", which is synchronized to the clock signal, and provides the digital binary signals to selector 7 as the regenerated data.

The second regeneration system II uses a PR and bit-by-bit decoding method.

The regeneration signals from magneto-optical disk 22 are input to PR-equalizing circuit 23, which converts the regeneration signals to PR signals. The PR signals are provided to PLL circuit 25 and A/D converter 24. PLL circuit 25 extracts clock signals synchronized to the PR signals from PR-equalizing circuit 4 and provides them to A/D converter 24. A/D converter 24 samples the PR signals with the clock signal from PLL circuit 25 to create data of ternary patterns of i2, i1, and i0 and provides them to a bit-by-bit decoder as sample data.

Because fluctuations occur in the PR signals due to the condition of the medium, the recording condition of the medium, and noise originating in the regeneration circuit, or the like which regenerates data from the medium, the actual signal of the sample data is spread having its center on the ternary values of the i2, i1, and i0. Bit-by-bit decoder 26 converts the input sample data as described previously and provides it to selector 7 as the regeneration data.

Third regeneration system III uses a PR and viterbi decoding method.

The regeneration signals from magneto-optical disk 22 are input to PR-equalizing circuit 23, which converts the regeneration signals into PR signals. The PR signals are provided to PLL circuit 25 and A/D converter 24. PLL circuit 25 extracts clock signals synchronized to the PR signals from PR-equalizing circuit 4 and provides them to A/D converter 24. A/D converter 24 samples the PR signals with the clock signal from PLL circuit 25 to create data having ternary patterns of i2, i1, and i0 and provides them to a viterbi decoder as sample data.

Because fluctuations occur in the PR signals due to the condition of the medium, the recording condition of the medium, and the noise originating in the regeneration circuit or the like which regenerates data from the medium, the actual signal of the sample data is spread centered on the ternary values of the i2, i1, and i0. Viterbi decoder 76 converts the input sample data as described previously and provides it to selector 7 as the regeneration data.

Based on instructions from control unit 8, selector 7 selects the regenerated data from the first regeneration system I when checking the format or the regenerated data from the second regeneration systen II when verifying and outputs the selected regenerated data. Under normal generating conditions, selector 7 selects the regeneration data from the third regeneration system III and outputs this selected regeneration data.

In this embodiment, the regenerated data regenerated by the PR and viterbi decoding method is output when normally regenerating; the regeneration data regenerated by the regeneration-equalizing and binary coding method is output when checking the format; and the regenerated data regenerated by the PR and bit-by-bit decoding method is output when verifying. In this case, since checking is accomplished closely in the order of a PR and viterbi decoding method, the PR and bit-by-bit decoding method, and the regeneration-equalizing and binary coding method (that is, PR and viterbi decoding method, PR and bit-by-bit decoding method - regeneration-equalizing and binary coding method), checking of the recording conditions can be accomplished closely. This can be done while minimizing the occurrence of errors at the time of normal regeneration. The occurrence of the errors when normally regenerating the data can be reduced, which maintains satisfactory conditions at the time of recording.

In the present embodiment, the PR and viterbi decoding method, the regeneration-equalizing and binary coding method, or the PR and bit-by-bit decoding method were selected when normally regenerating the data, when checking the format, or when verifying, respectively. However, this can be arranged so that the PR and viterbi decoding method is selected during normal regenerating, and that the regeneration-equalizing and binary coding method (or the PR and bit-by-bit decoding method) is selected during format checking and during verifying. Moreover, the PR and bit-by-bit decoding method can be selected when normally regenerating, and the regeneration-equalizing and binary coding method can be selected when checking format and when verifying. Furthermore, the viterbi decoding method and the bit-by-bit method may be used as the decoding method after modulating with the PR method in the present embodiment. However, the present invention is not limited to these decoding methods, and thus other decoding methods can be introduced.

Next, a magneto-optical disk apparatus shown in Figure 3 is described using the PR and viterbi decoding method based on the PR (1, 1) method and the PR (1, 2, 1) method described above.

In Figure 3, symbols which are the same as ones in Figure 10 indicate the same or similar composite elements thus, the description thereof is omitted. In this embodiment, devices which can select between the PR (1, 1) method and the PR (1, 2, 1) method are used as a PR-equalizing circuit 23 and a viterbi decoder 76. By providing a PR method instructing unit 21 and a reference pattern extracting circuit 27, PR method designating signals are sent to the PR-equalizing circuit 23 and to reference pattern extracting circuit 27, and instructions are given to PR-equalizing circuit 23 and to viterbi decoder 76 so that the PR (1, 1) method is selected when normally regenerating and that the PR (1, 2, 1) method is selected when retrying the regeneration in a case where data errors (bit errors) occur.

In this embodiment, by providing a reference pattern creating circuit 28, a first reference pattern (2T pattern: relative to a shortest mark length in case of using (1, 1) modulation) as an extracting source of the ideal values i0, i1, and i2 used in viterbi decoding using the PR (1, 1) and viterbi decoding method, and a second reference pattern (3T pattern) as an extracting source of the ideal values i0, i1, i2, i3, and i4 used in viterbi decoding using the PR (1, 2, 1) and viterbi decoding method, are created. Moreover, a recording signal composing circuit 29 is provided to composes digital data (user data) using reference patterns provided by reference pattern creating circuit 28, to record the composed signals on magneto-optical disk 22.

The relationship between the user data and the reference pattern at recording signal composing circuit 29 is illustrated in Figure 15. Recording signal composing circuit 29 inserts the first and the second reference patterns (2T pattern and 3T pattern) from reference pattern creating circuit 28 at a specified location in the user data (at the top of the user data section in each sector to be recorded on magneto-optical disk 22 in this embodiment). The signals created at recording signal composition circuit 29 are recorded on magneto-optical disk 22. The regenerated signals from magneto-optical disk 22 are sent to PR-equalizing circuit 23' and converted into the PR signals.

Figure 14 shows the components of PR-equalizing circuit 23 and has been described previously.

PLL circuit 25 creates clock signals synchronized to the input signals from the input PR signals and provides the signals to A/D converter 24, which samples the PR signals by the clock signals from PLL circuit 25. The sample data which is sampled at A/D converter 24 ideally becomes data of ternary patterns of i2, i1, and i0 if PR (1, 1) signals, or data of quinary patterns of i4, i3, i2, i1, and i0 if PR (1, 2, 1) signals. However, because fluctuations occur to the PR signals due to the condition of the medium, the recording condition of the medium, and noise originating in the regeneration circuit or the like which regenerates data from medium, the actual amplitude of the sample data is spread, centered on the ideal values.

Sample data from A/D converter 24 is provided to viterbi decoder 76 and reference pattern extracting circuit 27. Reference pattern extracting circuit 27 extracts signals from the sample data for viterbi decoder 76 (sample data before regenerated by the viterbi decoding method), with the PR method designating signals provided by PR method instructing unit 21, a reference pattern (2T pattern) of the PR (1, 1) method when normally regenerating or a reference pattern (3T pattern) of the PR (1, 2, 1) method when retrying, and extracts ideal values used at the time of viterbi decoding from the extracted reference pattern.

That is, the ideal values i0, i1, and i2 are extracted from the reference pattern of the PR (1, 1) method, and the ideal values i0, i1,i2, i3, and i4 are extracted from the reference pattern of the PR (1, 2, 1) method. Then, reference pattern extracting circuit 27 sends the extracted ideal values to viterbi decoder 76' as expected values. Viterbi decoder 76' converts the supplied sample data in viterbi by the PR (1, 1) method (see Figure 12) if the values d0, d1, and d2 are provided as the expected values, and converts the supplied sample data in viterbi by the PR (1, 2, 1) method (see Figure 13) if the values d0, d1, d2, d3 and d4 are provided as the expected values.

As a result, the regeneration data by the PR (1, 1) method is obtained when normally regenerating, and the regeneration data by PR (1, 2, 1) method is obtained when retrying. Therefore, both of an advantage of high speed processing of the PR (1, 1) and viterbi decoding method and high reliability of the PR (1, 2, 1) and viterbi decoding method can be achieved.

In this embodiment, two kinds of the viterbi decoding methods are used, namely the PR (1, 1) method and the PR (1, 2, 1) method. However, other than those methods, there are PR methods, such as a PR (1, 3, 3, 1) method, a PR (1, 0, -1) method, a PR (1, 1, -1, -1) method or a PR (1, 2, 0, -2, -1) method, which can be used in any combination. Moreover, the combinations are not limited to two types, but a multiple number of combinations may be possible. That is, how these methods are combined can be divided into an integration type, Nyquist type, or the like depending upon the characteristics of the waveforms of the regeneration signals from the recording medium. System designing using?? can be accomplished freely.

Furthermore, in this embodiment, the arrangement was made so that the decoding method was switched from the PR (1, 1) and viterbi decoding method to the PR (1, 2, 1) and viterbi decoding method when retrying in accordance with data errors. However, this arrangement can be made so that the decoding method is positively and manually switched, or that the method is switched in accordance with the types (disk types) of the medium.

Moreover, in the present embodiment, the first and second reference patterns are recorded with the digital data in each sector of magneto-optical disk 22. However, the first and second reference patterns can be written in advance in each sector of magneto-optical disk 22. By doing so, recording the reference patterns in each sector with the digital data is not required each time when recording information on magneto-optical disk 22. Thus, reference pattern creating circuit 28 and recording signal composing circuit 29 can be omitted.

Next, a magneto-optical disk apparatus shown in Figure 4 is described using the PR and viterbi decoding method based on the PR (1, 1) method and the PR (1, 2, 1) method described earlier.

In Figure 4, symbols which are the same as ones in Figure 4 indicate the same or similar composite elements, thus, the descriptions thereof are omitted. In this embodiment, devices which can select between the PR (1, 1) method and the PR (1, 2, 1) method are used as PR-equalizing circuit 23' and viterbi decoder 76'. Moreover, by providing a PR method instructing unit 21, a medium type determining unit 30, a verifying unit 31, reference pattern creating circuit 28, and a recording signal composing circuit 29, the PR method designating signals are sent from PR method instructing unit 21 to PR-equalizing circuit 23', viterbi decoder 76', and reference pattern creating circuit 28 based on the results of determinations at medium type determining unit 30 and verifying unit 31.

Medium type determining unit 30 determines from a designation in the case of magneto-optical disk 22 whether the magneto-optical disk is a PR (1, 1)-only disk, a PR (1, 2, 1)-only disk, a sectionally PR-method-designated disk, or an undesignated disk. In other words, medium type determining unit 30 determines which type of a disk the magneto-optical disk is among four types of disks.

The first type of disk is a PR (1, 1)-only disk. This is a PR method designated disk in which the data is always recorded and regenerated using the PR (1, 1) method. Substitute sectors are utilized when verify errors occur. As described later, the 2T pattern is always used as the reference pattern.

The second type of disk is a PR (1, 2, 1)-only disk. This is a PR method designated disk in which the data is always recorded and regenerated using the PR (1, 2, 1) method. Substitute sectors are utilized when verify errors occur. As described later, the 3T pattern is always used as the reference pattern.

The third type of disk is a sectionally PR method designated disk. This is a disk in which the data is recorded to and regenerated from specified sections using specified PR methods. When it is known that the characteristics of recording and regenerating information are not constant in each section of the recorded medium, the PR method which is the most appropriate for the characteristics of recording and regenerating in each section is designated. A designation table which is used in each section is recorded in specified non-user areas when formatting. The magneto-optical disk apparatus switches the PR method when recording and regenerating data to correspond by reading the data in the areas into a memory first. By doing so, the most advantageous PR method can be selected in any areas of the medium from the characteristics of line speed and materials and conditions of clock pulses and the like. Thus, both high reliability and high speed can be accomplished at the same time. In that case, as the reference pattern to be used, either the 2T pattern or the 3T pattern, is used in each area.

The fourth type of disk is an undesignated disk. This is a disk to which no PR method is designated. The PR (1, 1) method is used when normally recording and regenerating data. However, when verify errors occur when recording or regenerating data, the PR method to be used is switched from the PR (1, 1) method to the PR (1, 2, 1), which has higher code recovery performance, before using substitute sectors, to rerecord the data. Between the PR (1, 1) method and the PR (1, 2, 1) method, decoding can be accomplished faster with the PR (1, 1) method. In other words, if the PR (1, 2, 1) method is used, speed for recording and regenerating information slows down. However, the process is faster using the PR (1, 2, 1) method than using substitute sectors or substitute tracks.

Next, the operations of the magneto-optical disk apparatus shown in Figure 4 is described along with the functions at each portion.

When magneto-optical disk 22 is a PR (1, 1)-only disk, medium type determining unit 30 sends the result of the determination that the magneto-optical disk is a PR (1, 1)-only disk to PR method instructing unit 21. When the result of determination is received, PR method instructing unit 21 sends the PR method designating signals indicating that the PR (1, 1) and viterbi decoding method is used to PR-equalizing circuit 23', viterbi decoder 76', and reference pattern creating circuit 28.

When these PR method designating signals are received, reference pattern creating circuit 28 creates a first reference pattern (2T pattern: relative to a shortest mark length when using a (1, 1) modulation) as a source of extraction for the ideal values i0, i1, and i2 used for the PR (1, 1) and viterbi decoding method and sends the first reference pattern to recording signal composing circuit 29.

Recording signal composing circuit 29 creates the digital data (user data), forwards it to magneto-optical disk 22. The first reference pattern created by reference patten creating circuit 28 is combined with the digital data and the created signals are recorded on magneto-optical disk 22.

The relative positioning of the user data and the reference pattern at recording signal composing circuit 29 are shown in Figure 15. Recording signal composing circuit 29 inserts the first reference patterns (2T pattern) from reference pattern creating circuit 28 at a specified location in the user data (at the top of the user data part in each sector to be recorded on magneto-optical disk 22 in this embodiment). The signals created at recording signal composition circuit 29 are recorded on magneto-optical disk 22. The regenerated signals from magneto-optical disk 22 are sent to PR-equalizing circuit 23' and converted into the PR signals.

Figure 14 shows the components of PR-equalizing circuit 23 as described previously.

PLL circuit 25 creates clock signals synchronized to the input signals from the input PR signals and provides the signals to A/D converter 24, which samples the PR signals using the clock signals from PLL circuit 25. The sample data which is sampled at A/D converter 24 ideally becomes data of ternary patterns of i2, i1, and i0. However, because fluctuations occur to the PR signals due to the condition of the medium, the recording condition of the medium, and the noise originating in the regeneration circuit or the like which regenerates data from medium, the actual amplitude of the sample data is spread centered on the ideal values.

The sample data from A/D converter 24 is provided to viterbi decoder 76'. Viterbi decoder 76' extracts the reference pattern (2T pattern) from the given sample data, extracts the ideal values i0, i1, and i2 from the extracted reference pattern. It then converts in viterbi the sample data from A/D converter 24 with the PR (1, 1) method (see Figure 12) in which the ideal values i0, i1, and i2 are used as the expected values d0, d1, and d2.

As a result, regenerated data by the PR (1, 1) method is obtained when normally recording to or regenerating data from the PR (1, 1)-only disk. This regenerated data is provided to verifying unit 31 to be checked for errors by checking with the user data or by ECC. As a result of this, if a verify error is determined, the result of the determination is sent to PR method instructing unit 21. In this case, recording and regenerating the user data are retried by using substitute sectors. However, since the determination that magneto-optical disk 22 is a PR (1, 1)-only disk by medium type determining unit 30 is made, the PR method instructing unit 21 keeps sending the PR method designating signals for using the PR (1, 1) and viterbi decoding method . In other words, in this case, recording and regenerating the user data are retried with the PR (1, 1) and viterbi decoding method by using the substitute sectors.

When magneto-optical disk 22 is a PR (1, 2, 1)-only disk, medium type determining unit 30 sends to PR method instructing unit 21 a determination result that magneto-optical disk 22 is a PR (1, 2, 1)-only disk. When this determination result is received, PR method instructing unit 21 sends a PR method designating signal for using the PR (1, 2, 1) and viterbi decoding method to PR-equalizing circuit 23' , viterbi decoder 76' , and reference pattern creating circuit 28.

When this PR method designating signal is received, reference pattern creating circuit 28 creates a second reference pattern (3T pattern) as the ideal values i0, i1, i2, i3, and i4 used for the viterbi signals in the PR (1, 2, 1) and viterbi decoding method and send it to recording signal composing circuit 29.

Recording signal composing circuit 29 forwards the user data to magneto-optical disk 22 along with the second reference pattern created by reference pattern creating circuit 28, similar to that described in Figure 15, and records the composed signals on magneto-optical disk 22. The regenerated signals from the magneto-optical disk 22 are sent to PR- equalizing circuit 23' to be converted to the PR signals.

PR-equalizing circuit 23' selects the PR (1, 2, 1) signals from the PR method designating signal indicating the PR (1, 2, 1) and viterbi decoding method provided by PR method instructing unit 21 and forwards the signals to A/D converter 24 and PLL circuit 25 as the PR signals. PLL circuit 25 creates clock signals synchronized to the input signals from the input PR signals and provides the signals to A/D converter 24, which samples the PR signals by using clock signals from PLL circuit 25. The sample data, which is sampled at A/D converter 24, ideally becomes data of quinary patterns of i4, i3, i2, i1, and i0. However, because fluctuations occur to the PR signals due to the condition of the medium, the recording condition of the medium and the noise originating in the regeneration circuit or the like which regenerates data from medium, the actual amplitude of the sample data is spread, centered on the ideal values.

The sample data from A/D converter 24 is provided to the viterbi decoder 76'. Viterbi decoder 76' extracts the reference pattern (3T pattern) from the given sample data, extracts the ideal values i0, i1, i2, i3, and i4 from the extracted reference pattern. It then converts in viterbi the sample data from A/D converter 24 with the PR (1, 2, 1) method (see Figure 13) in which the ideal values i0, i1, i2, i3, and i4 are used as the expected values d0, d1, d2, d3, and d4.

As a result, regenerated data by the PR (1, 2, 1) is obtained when normally recording to or regenerating data from the PR (1, 2, 1)-only disk. This regenerated data is provided to verifying unit 31 to be checked for errors. As a result of this, if a verify error is determined, the result of the determination is sent to PR method instructing unit 21. In this case, recording and regenerating the user data are retried by using substitute sectors. However, since the determination result that magneto-optical disk 22 is a PR (1, 2, 1)-only disk by the medium type determining unit 30 is made, the PR method instructing unit 21 keeps sending the PR method designating signals for using the PR (1, 2, 1) and viterbi decoding method. In other words, in this case, recording and regenerating the user data can be retried with the PR (1, 2, 1) and viterbi decoding method by using the substitute sectors.

When the magneto-optical disk 22 is a sectionally PR-method-designated disk, medium type determining unit 30 sends to PR method instructing unit 21 a determination result indicating magneto-optical disk 22 is a sectionally PR-method-designated type of disk. Receiving this determination result, the PR method instructing unit 21 sends to PR-equalizing circuit 23', viterbi decoder 76', and reference pattern creating circuit 28 a PR method designating signal indicating the PR (1, 1) and viterbi decoding method, if the targeted area is a PR (1, 1) method designated area, or a PR method designating signal indicating the PR (1, 2, 1) and viterbi decoding method, if the area is a PR (1, 2, 1) method designated area. This is done by referring to a designation table of the PR method by areas which is read from a specified non-user area in magneto-optical disk 22 and stored in a memory. As a result, recording and regenerating the user data are accomplished in the PR (1, 1) and viterbi decoding method for the PR (1, 1) method designated areas and in the PR (1, 2, 1) and viterbi decoding method for the PR (1, 2, 1) method designated areas.

When the magneto-optical disk 22 is an undesignated disk, medium type determining unit 30 sends to PR method instructing unit 21 a determination result that magneto-optical disk 22 is an undesignated disk. Receiving this determination result, PR method instructing unit 21 sends to PR-equalizing circuit 23' , viterbi decoder 76' and reference pattern creating circuit 28 a PR method designating signal indicating the PR (1, 1) and viterbi decoding method.

Receiving this PR method designating signal, reference pattern creating circuit 28 creates a first reference pattern (2T pattern) and sends it to recording signal composing circuit 29. Recording signal composing circuit 29 creates the user data and forwards it to magneto-optical disk 22, combines it with first reference pattern created by reference pattern creating circuit 28, similarly to described in Figure 8, and records the composed signals on magneto-optical circuit 22. The regenerated signals from magneto-optical disk 22 are sent to PR-equalizing circuit 23' and converted to the PR signals.

PR-equalizing circuit 23' selects the PR (1, 1) signal from the PR method designating signal indicating the PR (1, 1) and viterbi decoding method and provides it to A/D converter 24 and PLL circuit 25 as the PR signals. PLL circuit 25 creates clock signals synchronized to the input signal from the input PR signal and provides them to A/D converter 24. The A/D converter 24 samples the PR signals using the clock signals from PLL circuit 25. The sample data sampled at A/D converter 24 is provided to viterbi decoder 76'

Viterbi decoder 76' extracts the reference pattern (2T pattern) from the given sample data, extracts the ideal values i0, i1, and i2, and then converts, in viterbi with the PR (1, 1) method, the sample data from A/D converter 24 in which the ideal values i0, i1, and i2 are used as the expected values d0, d1, and d2. As a result of this, regenerated data by the PR (1, 1) method is obtained when normally recording to and regenerating data from the undesignated disk. This regenerated data is provided to verifying unit 31 to be checked for errors. As a result, if verify errors are determined, the determination result is sent to PR method instructing unit 21.

In this case, before using substitute sectors, recording and regenerating the user data is retried in the sectors in which the verify errors were found. At this time, since a determination result from medium type determining unit 30 indicated that magneto-optical disk 22 is an undesignated disk, PR method instructing unit 21 sends to PR-equalizing circuit 23', viterbi decoder 76', and reference pattern creating circuit 28 a PR method designating signal for the PR (1, 2, 1) and viterbi decoding method instead of the PR method designating signal for the PR (1, 1) an viterbi decoding method. As a result, recording and regenerating the user data can be retried in the PR (1, 2, 1) and viterbi decoding method to the sector in which the verify errors were found before using the substitute sectors.

That is, in the present embodiment, when magneto-optical disk 22 is an undesignated disk, recording and regenerating data are accomplished in the PR (1, 1) method when normal recording and regenerating is performed and in the PR (1, 2, 1) method when verify errors are found. Therefore, the advantage of a high speed process using the PR (1, 1) and viterbi decoding method and the advantage of high reliability using the PR (1, 2, 1) and viterbi decoding method can be achieved. In addition, according to the present embodiment, since the reference patterns are extracted from the sample data and the ideal values are extracted from the extracted reference patterns, the ideal values are changed depending on conditions of recording and regenerating. Thus, more accurately regenerated data can be obtained compared to a case in which the ideal value is fixed.

In this embodiment, two kinds of viterbi decoding methods are used, namely the PR (1, 1) method and the PR (1, 2, 1) method. However, other than those methods, there are PR methods, such as a PR (1, 3, 3, 1) method, a PR (1, 0, -1) method, a PR (1, 1, -1, -1) method or a PR (1, 2, 0, -2, -1) method, which can be used in any combination. Moreover, the combinations are not limited to two types, but a multiple number of combinations may be possible. That is, how these methods are combined can be divided into an integration type, Nyquist type, or the like depending upon the characteristics of the waveforms of the regeneration signals from the recording medium. This design option can be accomplished freely.

Moreover, in this embodiment, one of the first and second reference patterns that is specified is recorded in each sector of magneto-optical disk 22 with digital user data. However, one of the first or second reference patterns that is specified can be written in each sector of magneto-optical disk 22 in advance.

Furthermore, in this embodiment, if magneto-optical disk 22 is a sectionally PR-method-designated disk, the first reference pattern is recorded in each sector of the PR (1, 1) method designated areas with the digital user data, and the second reference pattern is recorded in each sector of the PR (1, 2, 1) method designated areas with the digital area. However, the first reference pattern can be written in each sector of the PR (1, 1) method designated areas with the digital user data, and the second reference pattern can be written in each sector of the PR (1, 2, 1) method designated areas in advance.

As is clear from the above descriptions, according to the first embodiment, which one of the first to Nth regenerating means is used for regenerating data may be selected according to various conditions. For example, if data under normally regenerating conditions, data regeneration may be repeated using other regenerating methods which have higher code recovery performance to obtain high reliability and high speed in the process.

Moreover, according to the first embodiment, the data is regenerated by a first regeneration means under normal circumstances, while regenerating the data may be reattempted using a second regenerating means which has higher code recovery performance if data errors occur when regenerating. Thus both a high reliability and a high speed process is possible.

Furthermore, according to the first embodiment, which of the first to Nth regenerating means is used for regenerating data is selected in accordance with the condition of controlling the manual switch, the condition of detecting data errors, the condition of detecting the disk types, the condition of detecting the disk temperature, or the condition of detecting the line speed of the targeted sectors. Thus, closer selection of the regenerating method is possible.

According to the second embodiment, by selecting data (data regenerated by the PR and a specified decoding method) regenerated by the second regenerating means when normally regenerating and data (data regenerated by the regeneration-equalizing and binary coding method) regenerated by the first regenerating means when checking the recording condition, the recording condition can be closely controlled while minimizing the occurrence of errors during normal regeneration. This obtains the best conditions when recording, and thus, occurrences of errors during normal regeneration can be decreased.

Moreover, according to the second embodiment, by selecting data (data regenerated by the PR and viterbi decoding method) regenerated by the second regenerating means during normal regeneration and data (data regenerated by the PR and bit-by-bit method) regenerated by the first regenerating means when checking the recording condition, recording conditions can be closely controlled while minimizing the occurrence of errors during normal regeneration conditions. This obtains the best recording condition and thus, occurrences of errors during normal regeneration can be decreased.

Furthermore, according to the second embodiment, by selecting data (data regenerated by the PR and viterbi decoding method) regenerated by the third regenerating method during normally regeneration, data (data regenerated by the PR and bit-by-bit decoding method) regenerated by the second regenerating means when verifying, and data (data regenerated by the regeneration-equalizing and binary coding method) regenerated by the first regenerating means when checking the format, recording conditions can be closely controlled while minimizing occurrence of errors during normal regeneration. This obtains the best conditions when recording, and thus, occurrences of errors during normal regeneration can be decreased.

According to the third embodiment, when recording information to the recording medium, the first to Nth reference patterns are recorded in each sector of the recording medium with the digital data to extract the ideal values used for viterbi decoding in the PR and viterbi decoding method. Therefore, more accurately regenerated data can be obtained from the ideal values which fluctuate, depending on the condition of recording and regenerating information. In addition, if, for example, there is a data error when regenerating normally, the regeneration of data can be retried with a regenerating method which has higher code recovery performance. Thus, both high reliability and high speed are possible in the process.

Moreover, according to the third embodiment, the first to Nth reference patterns are recorded in each sector of the recording medium with digital data, while which one of the first to Nth regenerating means is used for regenerating data is selected in accordance with various conditions. In that case, the reference pattern corresponding to the selected regenerating method is extracted from sample data before regenerated by viterbi decoding, and the ideal values are extracted from the extracted reference pattern. Viterbi-decoding is accomplished using these extracted ideal values. Therefore, the regenerated data is more accurately obtained from the ideal values which fluctuate depending on conditions of recording and regenerating information. In addition, if, for example, data error occurs when normally regenerating, the regeneration of data is retried with another regenerating method which has higher code recovery performance, providing both high reliability and high speed in the process.

Furthermore, according to the third embodiment, the first and second reference patterns are recorded in each sector of the recording medium with digital data. The regeneration of data is accomplished with the first regenerating means when normally regenerating, and the regeneration of data is retried by the second regenerating means if data errors occur while regenerating the data. In that case, the reference pattern corresponding to the selected regenerating method is extracted from sample data before regenerated by viterbi-decoding, and the ideal values are extracted from the extracted reference pattern. Viterbi-decoding is accomplished using these extracted ideal values. Therefore, the regenerated data is more accurately obtained from the ideal values which fluctuate depending on conditions of recording and regenerating. In addition, if, for example, data errors occur during normal regeneration of information, the regeneration of information is retried with another regenerating method which has higher code recovery performance. Thus, both high reliability and high speed are possible within the process.

In addition, according to the third embodiment, because the first to Nth reference patterns are written in each sector of the recording medium in advance, there is no necessity for recording the reference patterns in each sector with digital data when recording data to the recording medium each time. Therefore, in addition to effects similar to the first embodiment of the present invention, simplification of the circuit components is possible.

According to the fourth embodiment, one of the first to Nth reference patterns that is specified is recorded in each sector of the recording medium with digital data to obtain more accurately regenerated data from the ideal values, which fluctuate depending on conditions for recording and regenerating data. In addition, if, for example, verify errors occur when recording and regenerating data, a reference pattern of another regenerating method, which has higher code recovery performance, is rerecorded with digital data on the sector at which the verify errors occurred and regeneration is reattempted using a regenerating method corresponding to the reference pattern.

Moreover, according to the fourth embodiment, when normally recording and regenerating data, the first reference pattern is recorded in each sector of the recording medium with digital data, and the data is regenerated by the first regenerating means. If a verify error occurs when recording and regenerating data, the second reference pattern is rerecorded with digital data on the sector at which the verify error occurred, and the regeneration of the data is reattempted by the second regenerating means. Therefore, regeneration of data is more accurately obtained from the ideal values which fluctuate, depending on the condition of recording or regenerating. Thus, both high reliability and high speed in the process are possible.

Furthermore, according to the fourth embodiment, because one of the first to Nth reference patterns that is specified is written in each sector of the recording medium in advance, there is no need for recording the reference patterns in each sector with digital data each time. Therefore, in addition to effects similar to the first embodiment of the present invention, simplification of the circuit components is possible.

In addition, according to the fourth embodiment, since the first reference pattern and the second reference pattern are written in the first area and the second area of the recording medium, respectively, in advance, there is no need for recording these reference patterns in each sector of the recording medium with digital data each time, while regenerating data with the PR and viterbi decoding method most appropriate for each area is possible. Therefore, both high reliability and high speed in the process are possible, and thus the circuit components can be simplified.

While the present invention has been described by way of preferred embodiments, it is to be understood that it is not limited thereto but only by the scope of the following claims.

## Claims

1. An information regenerating apparatus, comprising:

   first to Nth regenerating means (I, II, III) which have different code recovery performances which regenerate information recorded in a recording medium (22) using a predetermined decoding method after modulating with a partial response method; and
   regenerating method selecting means (7) for selecting any of said first to Nth regenerating means (I, II, III) to regenerate information.

2. The information regenerating apparatus according to claim 1 wherein said regenerating method selecting means also includes:
   means for detecting (81-86) predetermined external conditions.

3. The information regenerating apparatus according to one of claims 1 or 2 further comprising:
   reference pattern recording means (28) for recording first to Nth reference patterns which are sources of extracting ideal values used for the predetermined decoding method in said first to Nth regenerating means (I, II, III) in each sector of said recording medium (22) with digital data.

4. The information regenerating apparatus according to one of claims 1-3 further comprising:
   ideal value extracting means (27) for extracting reference patterns corresponding to a regenerating method selected by said regenerating method selecting means (7) from sample data before regenerated in coding method to extract ideal values used for the predetermined decoding method from extracted reference patterns,

5. The information regenerating apparatus according to one of claims 1-4 further comprising:

   information recording means (2) for recording information on a recording medium 22; and wherein said first to Nth regenerating means (I, II, III) includes:
   first regenerating means (I) for regenerating information recorded in said recording medium (22) in a predetermined decoding method after modulating it in a partial response method; and

second regenerating means (II) for regenerating information recorded in said recording medium (22) in the predetermined decoding method after modulating it in a second partial response method which has higher code recovery performance than said first partial response method;
first recording and regenerating means (29) for recording with digital data in each sector of said recording medium (22), a first reference pattern which is a source of extracting ideal values used in said first regenerating means (I) and regenerating information by said first regenerating means (I) when normally recording and regenerating information; and
second recording and regenerating means (29) for retrying recording second reference pattern which is a source of extracting ideal value used in said second regenerating means (II) with digital data in sectors in which verify and retrying regenerating information by said second regenerating means (II) when verify errors occur while recording and regenerating information.

**6.** The information regenerating apparatus according to one of claims 1-5 further comprising:
a recording medium (22) having first and second areas wherein a first and a second reference pattern, which are the sources of extracting ideal values used for a predetermined decoding method in a first and second partial response modulation method, which have different code recovery performance, and a predetermined decoding method are written in advance in each sector of said first and second areas, respectively.

**7.** The information regenerating apparatus according to one of claims 1-6 further comprising:

an information recording means (2) for recording information to the recording medium (22); and
reference pattern recording means (28, 29) for recording in each sector with digital data specified one of first to N-th reference patterns which are the sources for extracting ideal values used for the predetermined decoding method in said first to N-th regenerating means (I, II, III).

**8.** A method for regenerating information on a recording medium using the apparatus of claim 1 comprising the steps of:

recording first to Nth reference patterns which are sources of extracting ideal values in said first to Nth regenerating devices in each sector of said recording medium with digital data; and
regenerating information using first to Nth regenerating devices which have different code recovery performances which regenerate information recorded on the recording medium.

**9.** The method for regenerating information according to claim 8 further comprising the steps of:

selecting any of said first to Nth regenerating means to regenerate information in accordance with conditions; and
extracting reference patterns corresponding to a regenerating method selected from sample data before regenerated in a coding method to extract ideal values used for the decoding from extracted reference patterns.

**10.** A recording medium (22) having first and second areas wherein a first and a second reference pattern, which are the sources of extracting ideal values used for a predetermined decoding method in a first and second partial response modulation, which have different code recovery performance, and a predetermined decoding method are written in advance in each sector of said first and second areas, respectively.

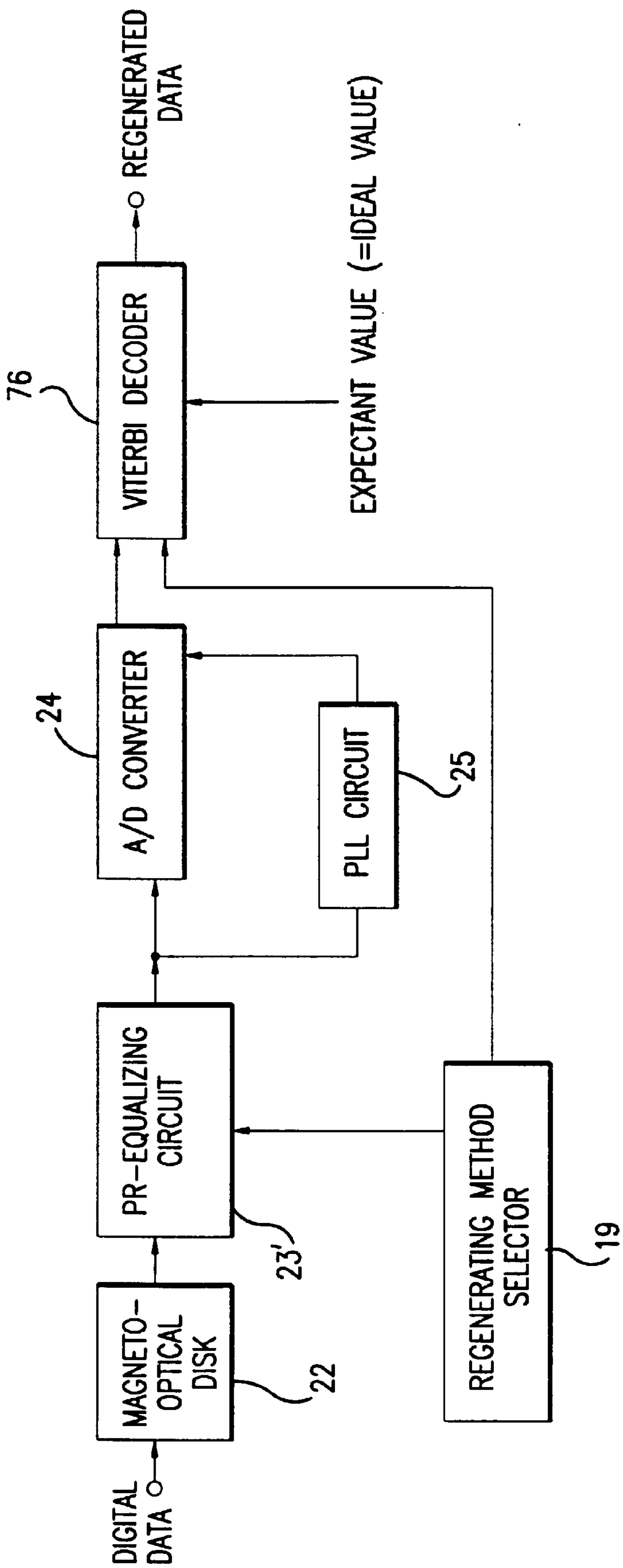
DIGITAL DATA
MAGNETO-OPTICAL DISK
22
PR-EQUALIZING CIRCUIT
23'
REGENERATING METHOD SELECTOR
19
A/D CONVERTER
24
PLL CIRCUIT
25
VITERBI DECODER
76
EXPECTANT VALUE (=IDEAL VALUE)
REGENERATED DATA

FIG.1

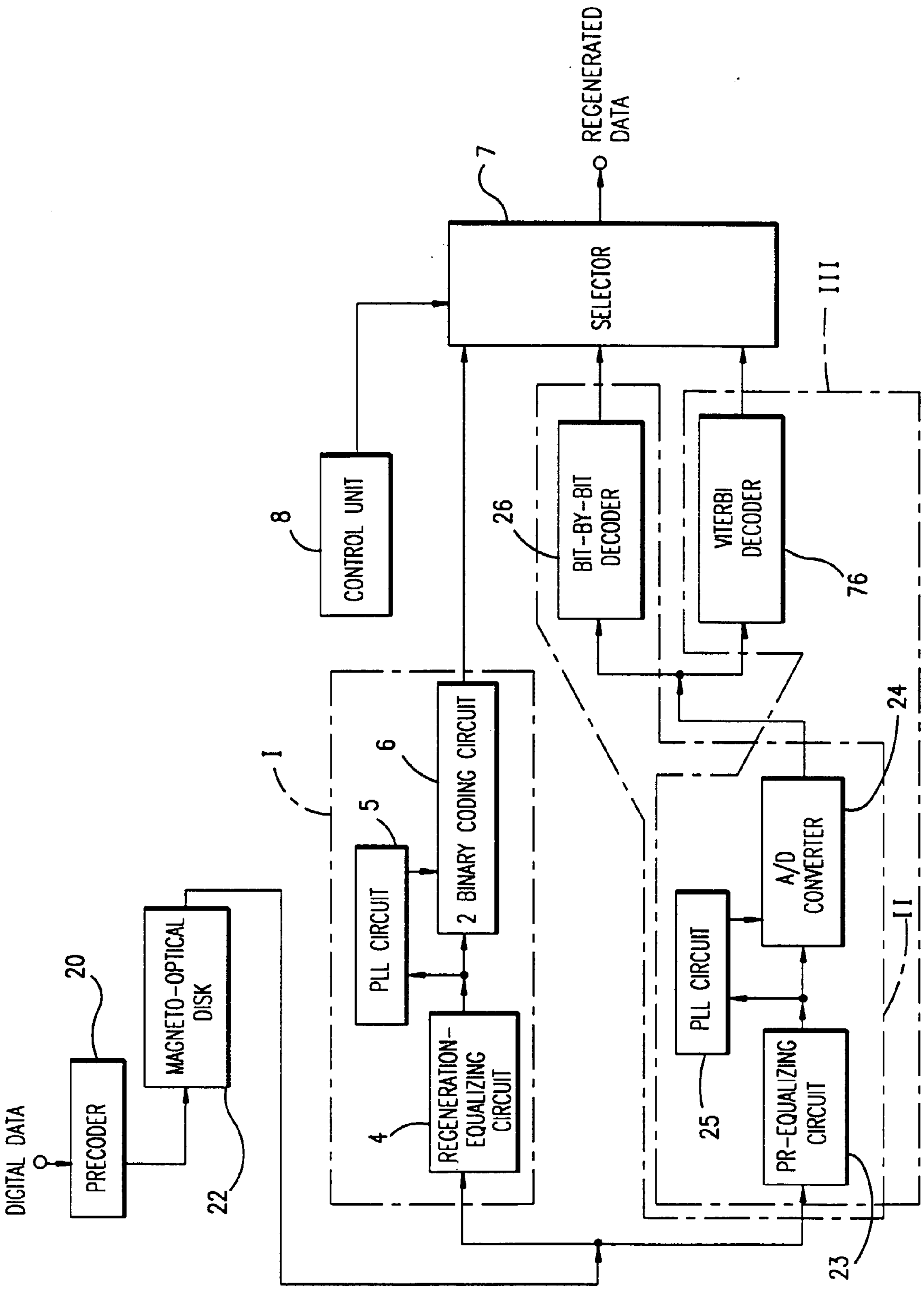
DIGITAL DATA
PRECODER
20
MAGNETO-OPTICAL DISK
22
REGENERATION-EQUALIZING CIRCUIT
4
PLL CIRCUIT
5
2 BINARY CODING CIRCUIT
6
I
CONTROL UNIT
8
SELECTOR
7
REGENERATED DATA
BIT-BY-BIT DECODER
26
VITERBI DECODER
76
III
A/D CONVERTER
24
PLL CIRCUIT
25
PR-EQUALIZING CIRCUIT
23
II

FIG.2

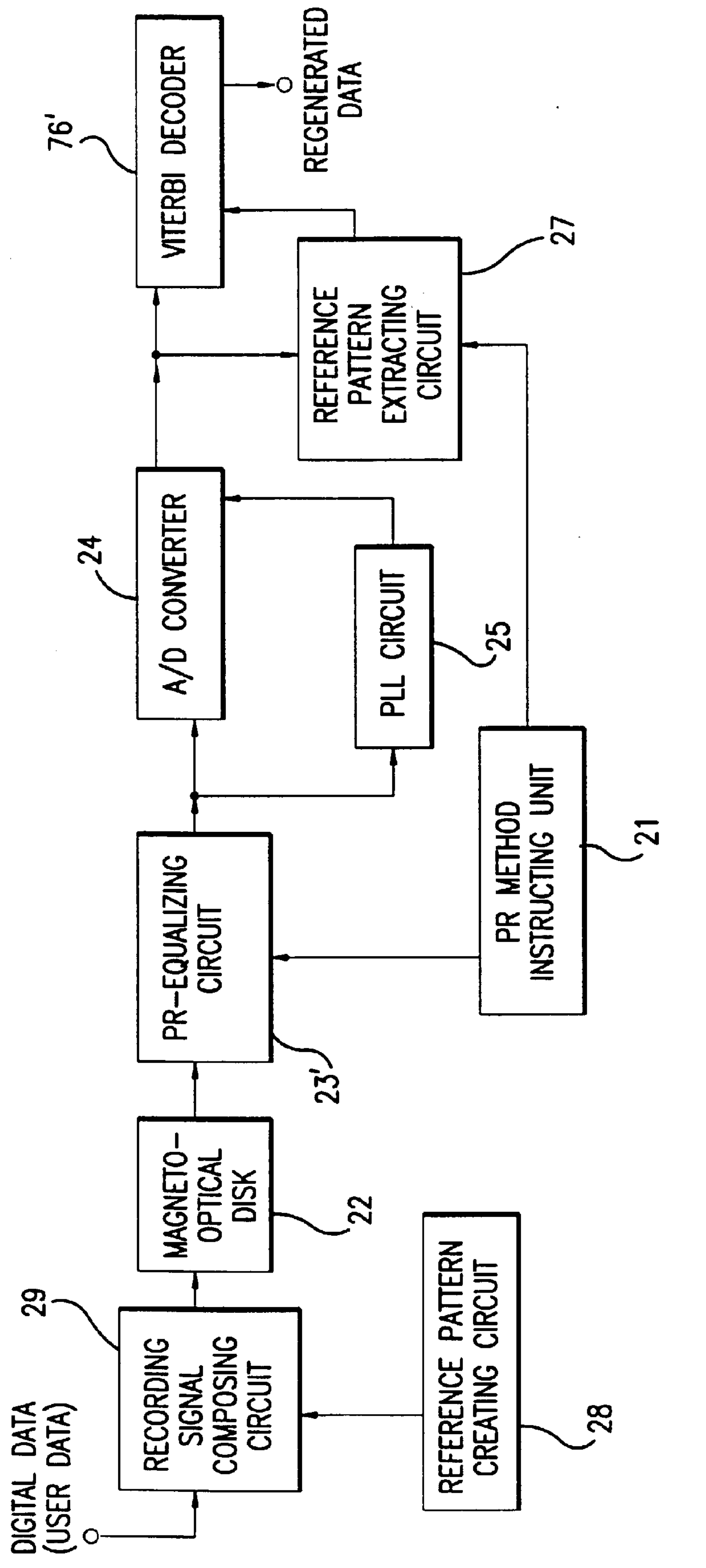
DIGITAL DATA (USER DATA)
RECORDING SIGNAL COMPOSING CIRCUIT
29
REFERENCE PATTERN CREATING CIRCUIT
28
MAGNETO-OPTICAL DISK
22
PR-EQUALIZING CIRCUIT
23'
PR METHOD INSTRUCTING UNIT
21
A/D CONVERTER
24
PLL CIRCUIT
25
REFERENCE PATTERN EXTRACTING CIRCUIT
27
VITERBI DECODER
76'
REGENERATED DATA

FIG.3

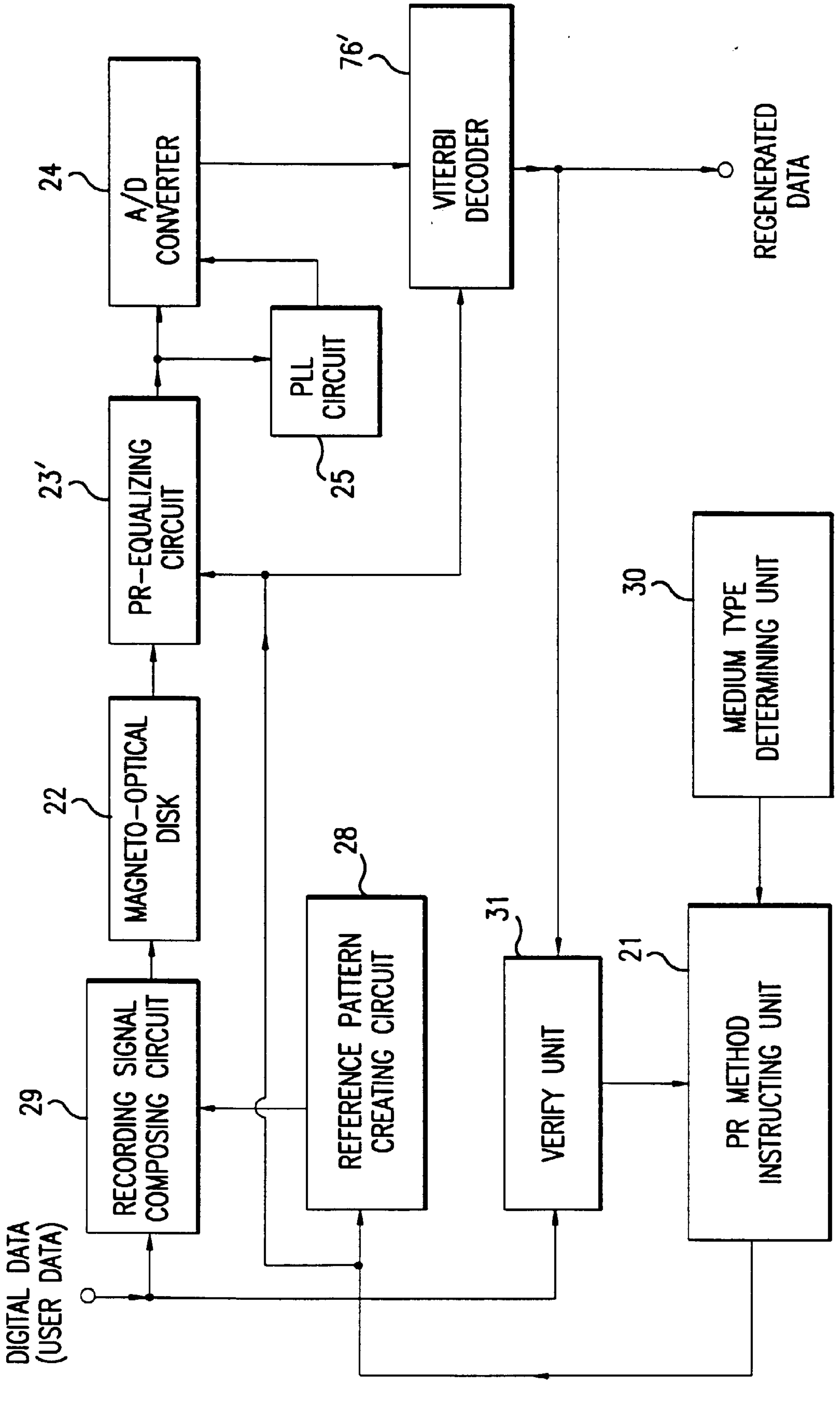
24
A/D CONVERTER
76'
VITERBI DECODER
REGENERATED DATA
PLL CIRCUIT
25
23'
PR-EQUALIZING CIRCUIT
22
MAGNETO-OPTICAL DISK
28
REFERENCE PATTERN CREATING CIRCUIT
29
RECORDING SIGNAL COMPOSING CIRCUIT
DIGITAL DATA (USER DATA)
31
VERIFY UNIT
30
MEDIUM TYPE DETERMINING UNIT
21
PR METHOD INSTRUCTING UNIT

FIG.4

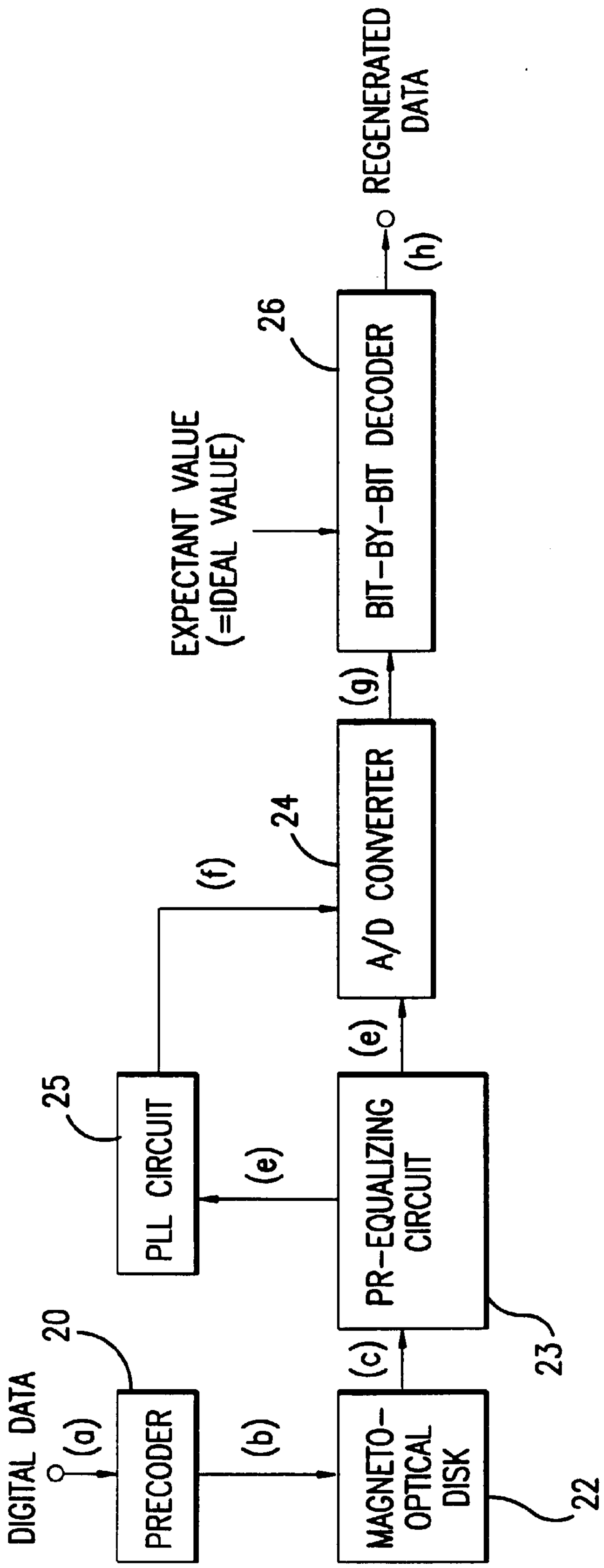
DIGITAL DATA
(a)
PRECODER
20
(b)
MAGNETO-OPTICAL DISK
22
(c)
PR-EQUALIZING CIRCUIT
23
(e)
PLL CIRCUIT
25
(e)
(f)
A/D CONVERTER
24
(g)
EXPECTANT VALUE (=IDEAL VALUE)
BIT-BY-BIT DECODER
26
(h)
REGENERATED DATA

FIG.5

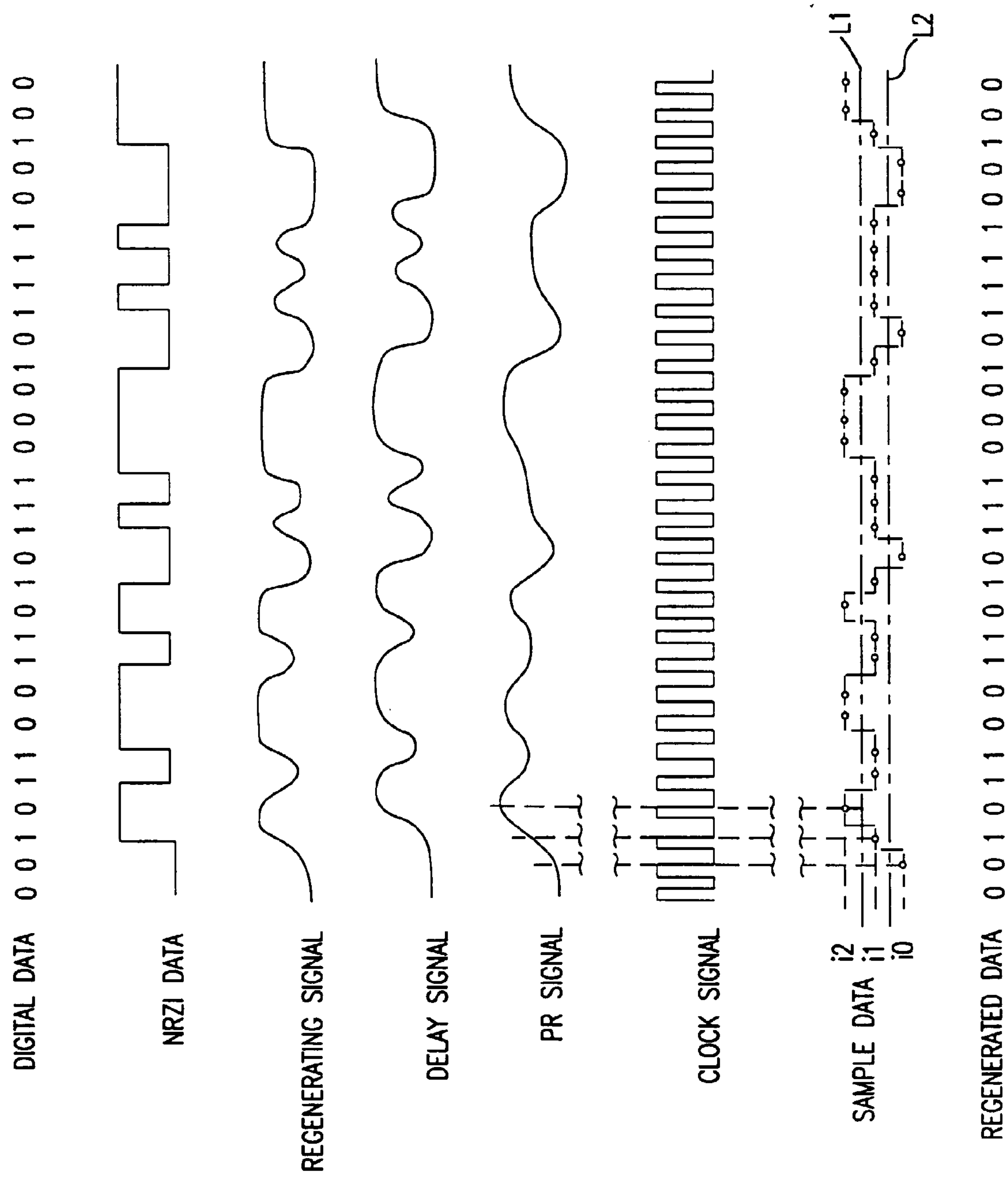


FIG.6a FIG.6b FIG.6c FIG.6d FIG.6e FIG.6f FIG.6g FIG.6h

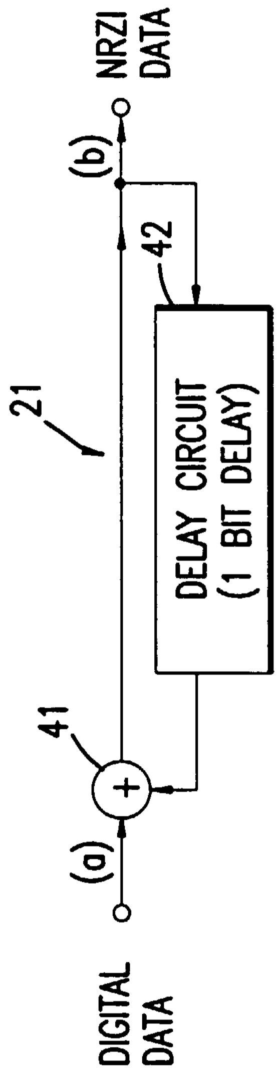
DIGITAL DATA
(a)
41
+
21
DELAY CIRCUIT (1 BIT DELAY)
42
(b)
NRZI DATA

FIG.7

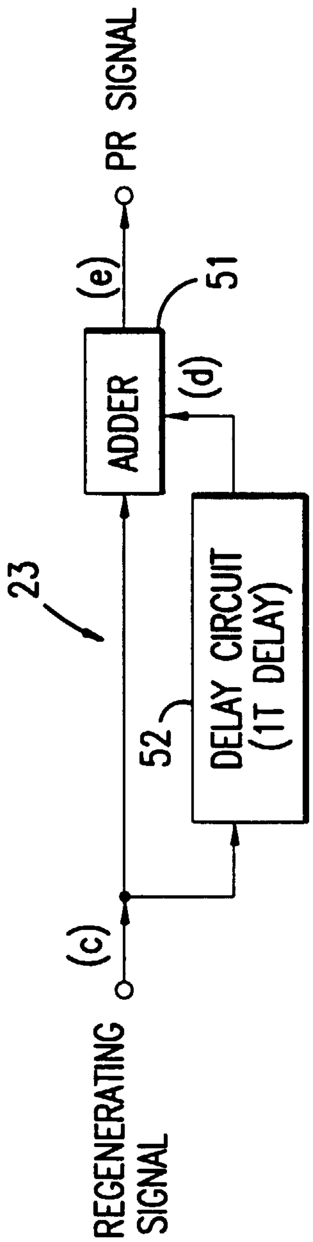
REGENERATING SIGNAL
(c)
23
52
DELAY CIRCUIT (1T DELAY)
ADDER
(d)
51
(e)
PR SIGNAL

FIG.8

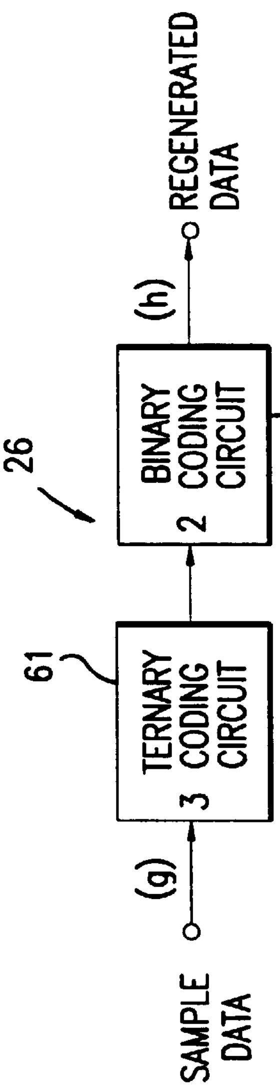
26
SAMPLE DATA
(g)
3
TERNARY CODING CIRCUIT
61
2
BINARY CODING CIRCUIT
62
(h)
REGENERATED DATA

FIG.9

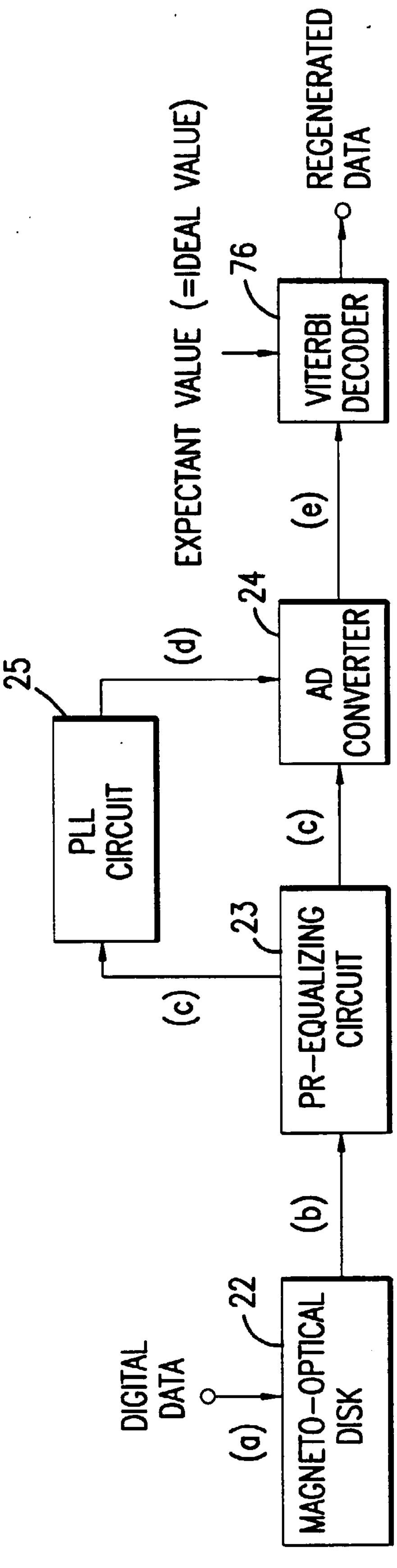
DIGITAL DATA
(a)
MAGNETO-OPTICAL DISK
22
(b)
PR-EQUALIZING CIRCUIT
23
(c)
PLL CIRCUIT
25
(c)
(d)
AD CONVERTER
24
(e)
EXPECTANT VALUE (=IDEAL VALUE)
VITERBI DECODER
76
REGENERATED DATA

FIG.10

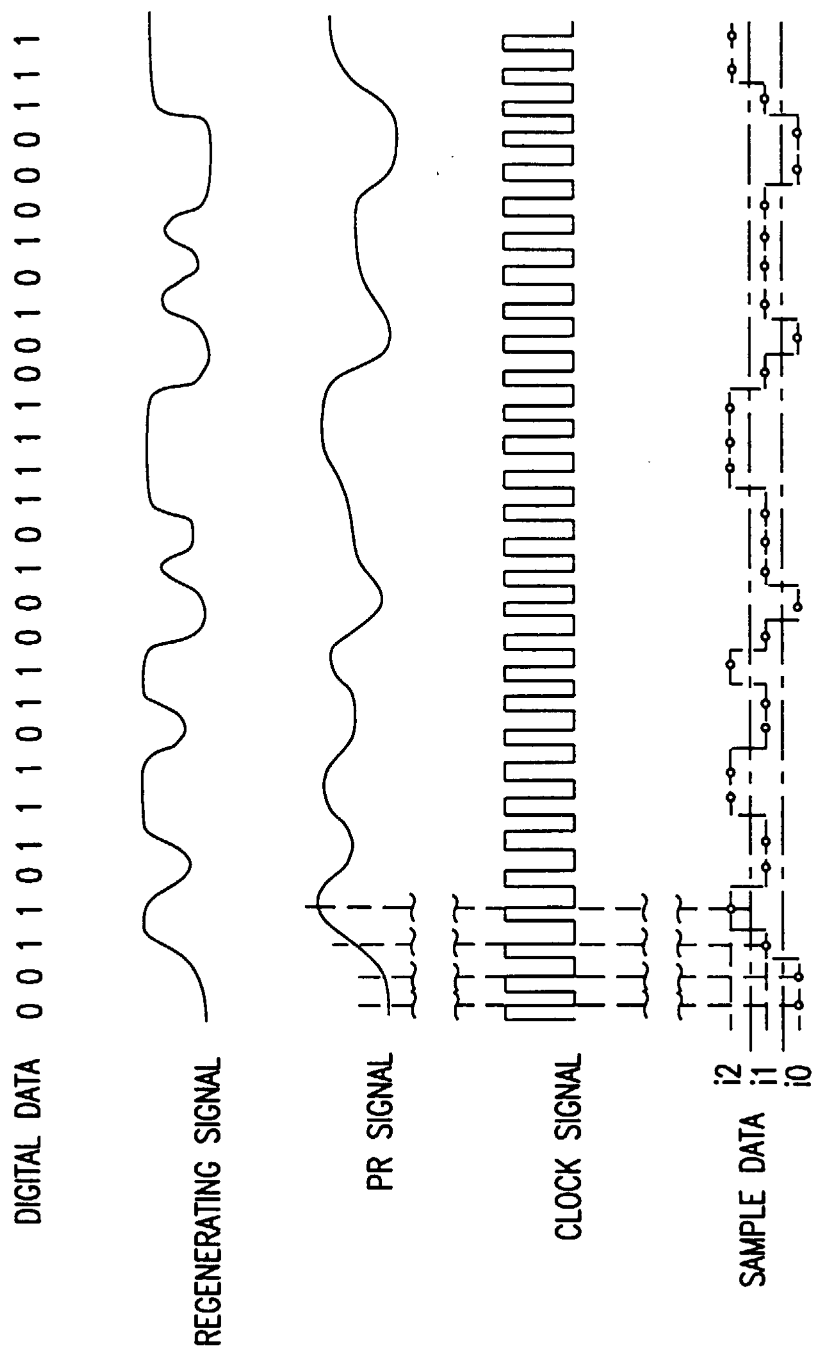


FIG.11a

FIG.11b

FIG.11c

FIG.11d

FIG.11e

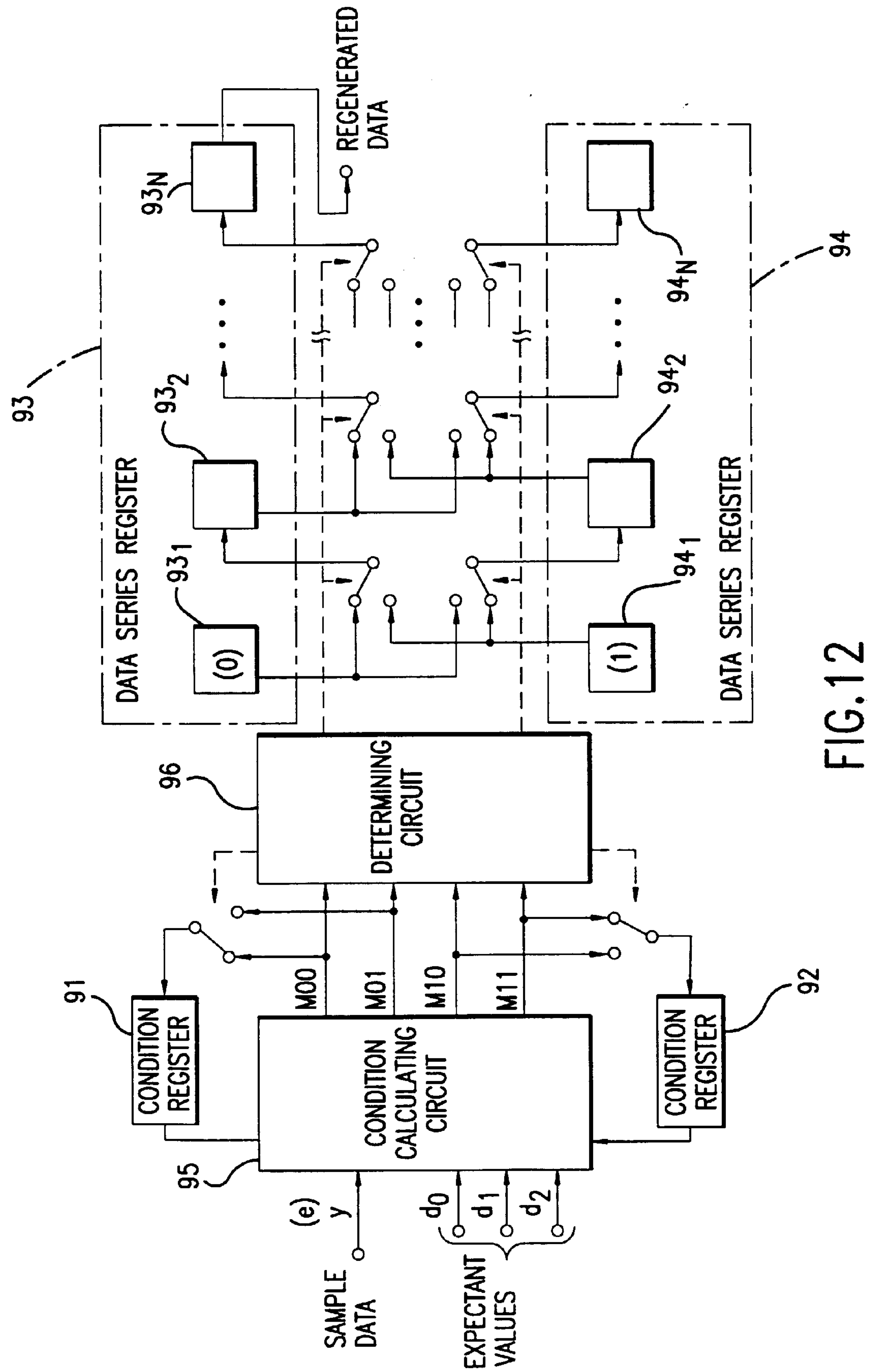
REGENERATED DATA
DATA SERIES REGISTER
DATA SERIES REGISTER
93
93N
932
931
(0)
94
94N
942
941
(1)
96
DETERMINING CIRCUIT
91
CONDITION REGISTER
92
CONDITION REGISTER
M00
M01
M10
M11
95
CONDITION CALCULATING CIRCUIT
(e)
y
SAMPLE DATA
d0
d1
d2
EXPECTANT VALUES

FIG.12

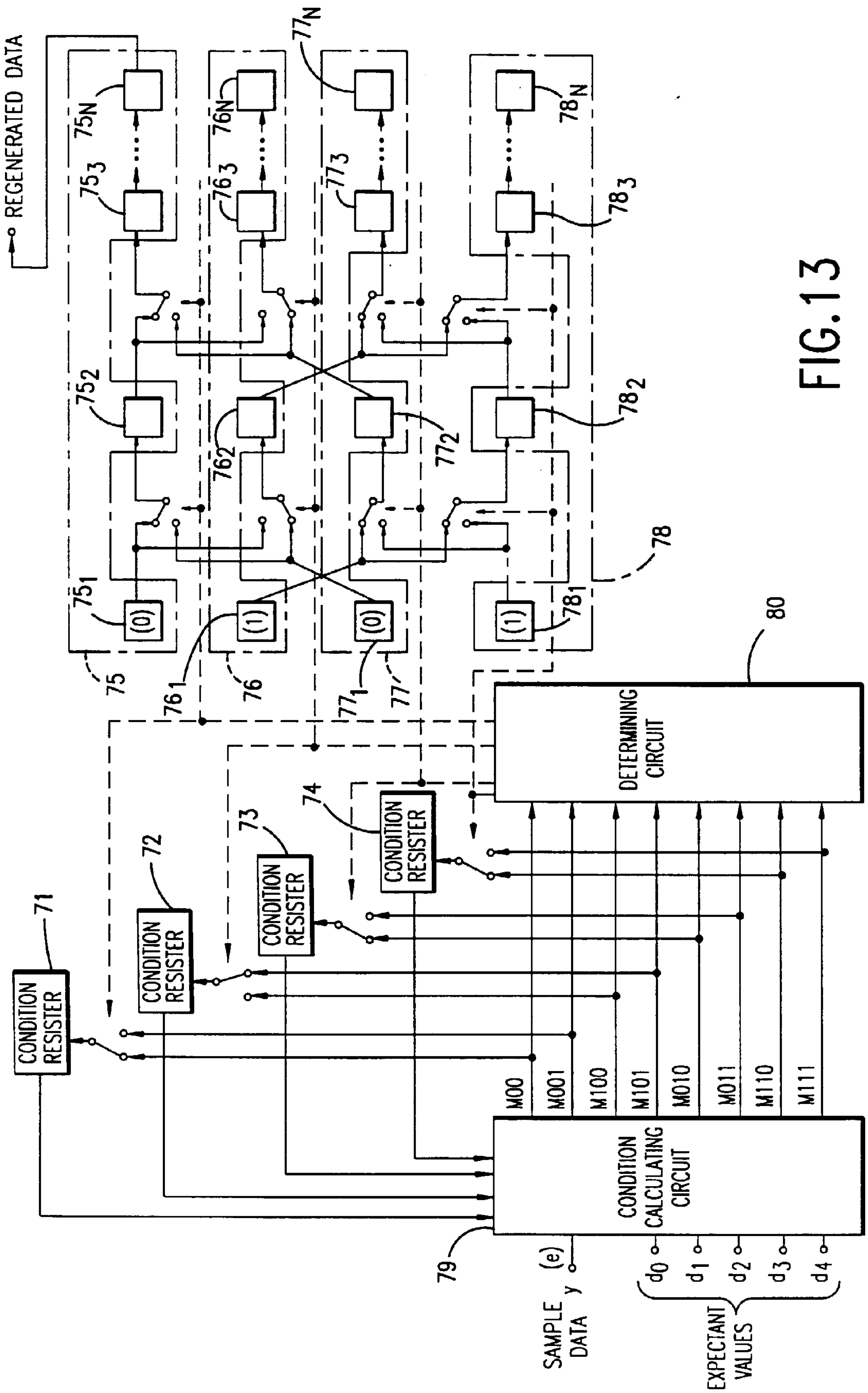
REGENERATED DATA
CONDITION RESISTER
71
72
73
74
DETERMINING CIRCUIT
80
CONDITION CALCULATING CIRCUIT
79
M00
M001
M100
M101
M010
M011
M110
M111
SAMPLE DATA
y
(e)
d0
d1
d2
d3
d4
EXPECTANT VALUES
75
76
77
78
(0)
(1)
(0)
(1)

FIG.13

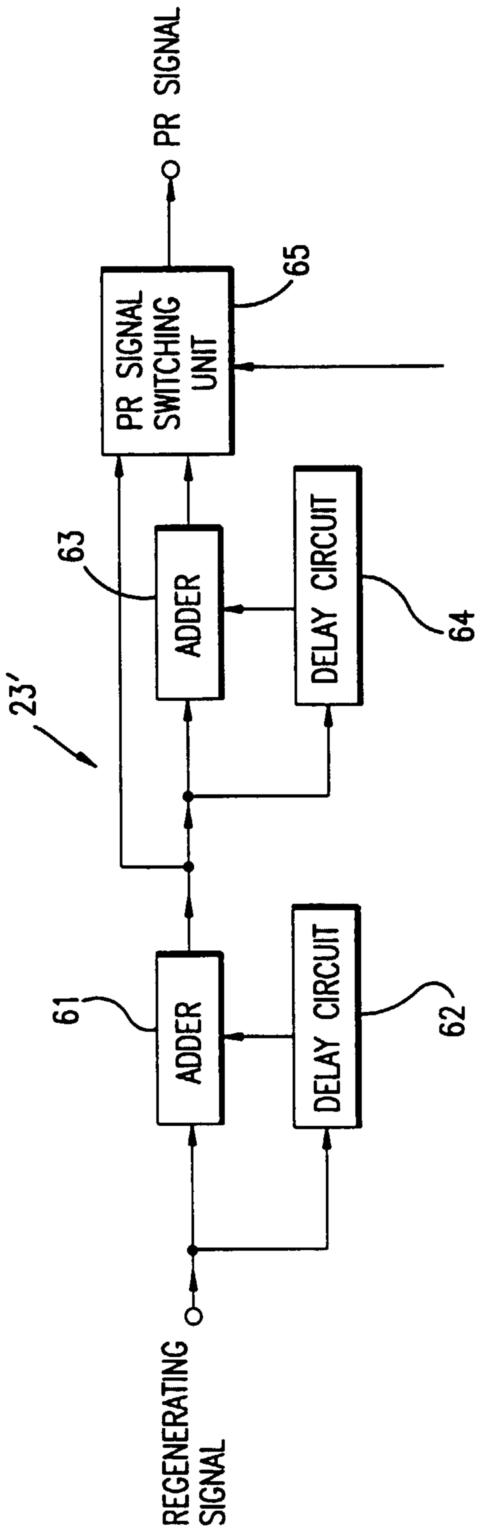
23'
REGENERATING SIGNAL
ADDER
61
DELAY CIRCUIT
62
ADDER
63
DELAY CIRCUIT
64
PR SIGNAL SWITCHING UNIT
65
PR SIGNAL

FIG.14

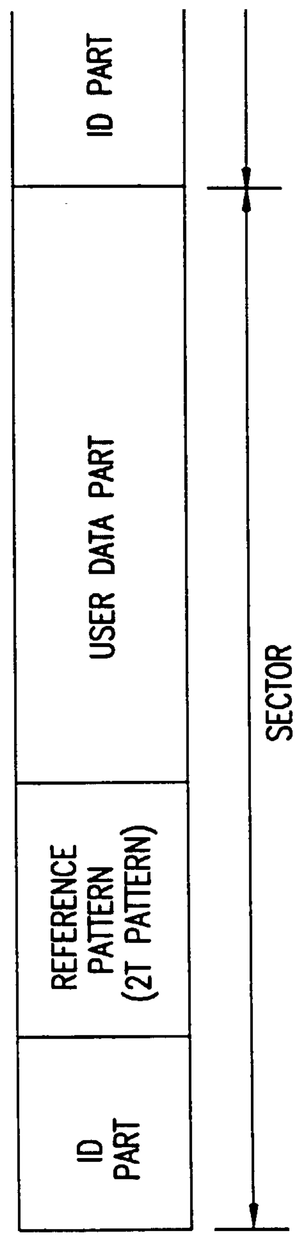
ID PART
REFERENCE PATTERN (2T PATTERN)
USER DATA PART
ID PART
SECTOR

FIG.15

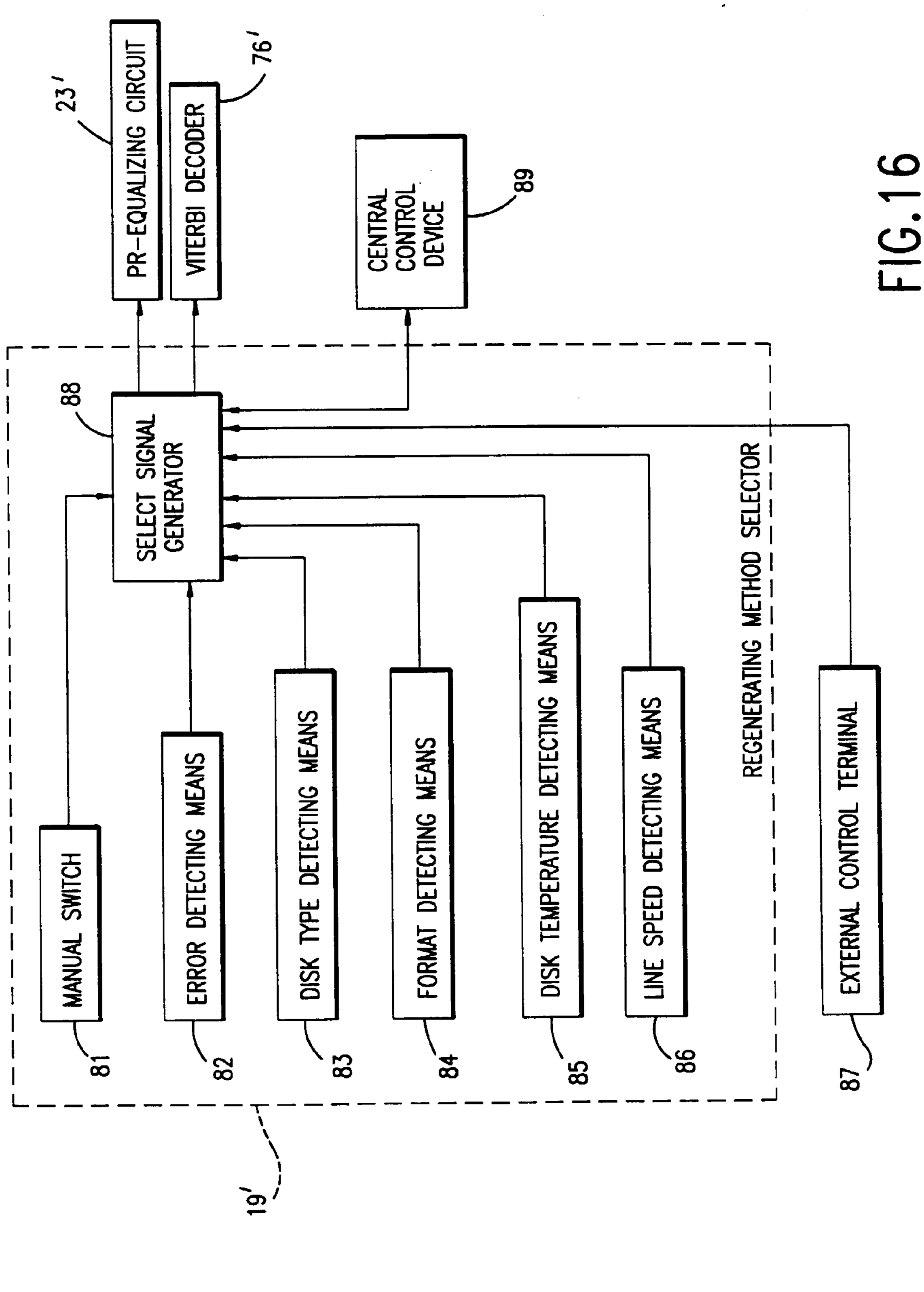
PR-EQUALIZING CIRCUIT
23'
VITERBI DECODER
76'
CENTRAL CONTROL DEVICE
89
SELECT SIGNAL GENERATOR
88
MANUAL SWITCH
81
ERROR DETECTING MEANS
82
DISK TYPE DETECTING MEANS
83
FORMAT DETECTING MEANS
84
DISK TEMPERATURE DETECTING MEANS
85
LINE SPEED DETECTING MEANS
86
REGENERATING METHOD SELECTOR
EXTERNAL CONTROL TERMINAL
87
19'

FIG. 16

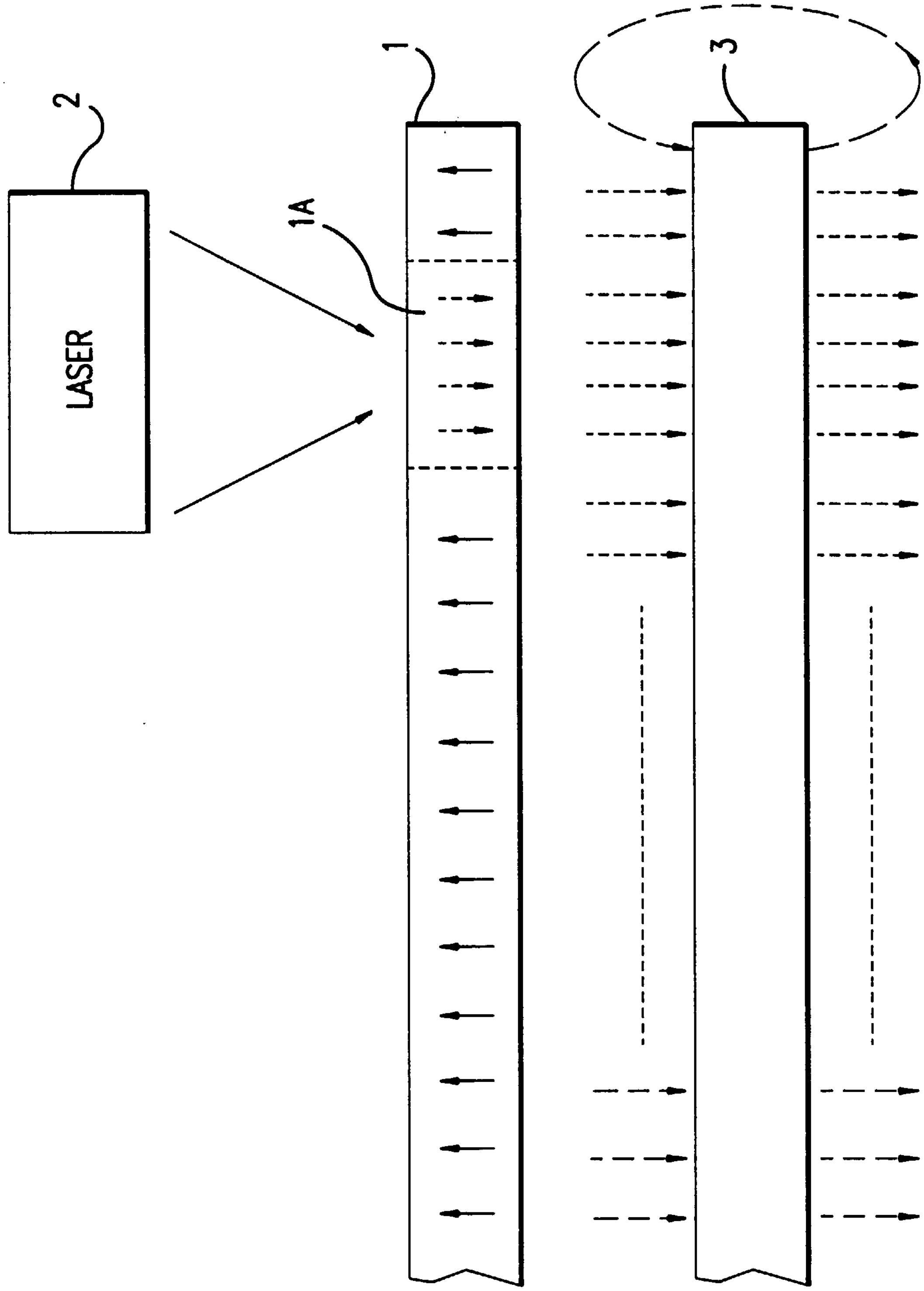


FIG.17